# EUROPEAN PATENT APPLICATION

(11) **EP 4 775 097 A1**
(43) Date of publication of application: **15.07.2026**
(21) Application number: 24896704.4
(22) Date of filing: 29.11.2024
(51) Int. Cl.: A47G 29/087, B25H 3/04, F16B 45/00

(54) **WALL-MOUNTABLE STORAGE SYSTEM, AND CART AND TOOLBOX SYSTEM ADAPTED FOR STORAGE SYSTEM**

(30) Priority: 29.11.2023 CN 202311620938; 20.12.2023 CN 202311757190; 15.03.2024 CN 202410303880
(71) Applicant: Nanjing Chervon Industry Co., Ltd., Nanjing, Jiangsu 211106 (CN)
(72) Inventor: CHEN, Cheng, Nanjing, Jiangsu 211106 (CN)
(74) Representative: Sun, Yiming
(86) International application number: PCT/CN2024/135576
(87) International publication number: WO 2025/113621

(57) **Abstract**

A wall-mountable storage system includes: a base detachably connected to a wall surface; and a storage container configured to be coupled to an item. A support component is configured to be detachably connected to the base. The storage system includes an adjustment portion, the storage container is detachably and fixedly connected to a first position on the base and a second position on the base, the storage container moves between the first position and the second position through the adjustment portion, and the storage container is connected to the base in a process where the storage container moves from the first position to the second position.

## Description

This application claims priority to Chinese Patent Application No. 202311620938.9 filed with the China National Intellectual Property Administration (CNIPA) on Nov. 29, 2023, Chinese Patent Application No. 202311757190.7 filed with the CNIPAon Dec. 20, 2023, and Chinese Patent Application No. 202410303880.3 filed with the CNIPA on Mar. 15, 2024, the disclosures of which are incorporated herein by reference in their entireties.

### TECHNICAL FIELD

The present application relates to a wall-mountable storage system.

### BACKGROUND

A storage system in the related art can be mounted on a wall by a user. The user may couple items, such as power tools, hand tools, and accessories, to the wall through support members. Thus, it is convenient for the user to manage the items and use the items subsequently. However, a storage system currently on the market mainly adopts a large mounting plate, and support members are fixedly connected to the mounting plate. Then, the user couples items to a base. However, when the items coupled to the support members interfere, the user needs to detach the support members from the mounting plate, move the support members to appropriate positions, and then mount the support members to the mounting plate. This operation is very inconvenient for the user.

This part provides background information related to the present application, and the background information is not necessarily the existing art.

### SUMMARY

An object of the present application is to solve or at least alleviate part or all of the preceding problems. To this end, an object of the present application is to provide a storage system in which a storage container is conveniently moved relative to a base.

To achieve the preceding object, the present application adopts the technical solutions described below. A wall-mountable storage system includes: a base detachably connected to a wall surface; and a storage container configured to be coupled to an item. A support component is configured to be detachably connected to the base. The storage system includes an adjustment portion, the storage container is detachably and fixedly connected to a first position on the base and a second position on the base, the storage container moves between the first position and the second position through the adjustment portion, and the storage container is connected to the base in a process where the storage container moves from the first position to the second position.

In some examples, the base has a certain length direction, and in the length direction of the base, when the storage container is mounted to the first position, a distance which the storage container is guided by the adjustment portion to move is greater than 0 mm and less than a length of the base along the length direction.

In some examples, the distance which the storage container is guided by the adjustment portion to move is less than a distance of the storage container along the length direction of the base.

In some examples, the storage container is mounted to the first position on the base, and the storage container is guided by the adjustment portion to slide from the first position to any position on the base.

In some examples, the storage system has a first-type storage container and a second-type storage container, the first-type storage container is mounted at the first position on the base, the second-type storage container is mounted at the second position on the base, and the first-type storage container is configured to be removed from the first position.

In some examples, the adjustment portion is disposed on the base.

In some examples, the storage system further includes a mounting assembly, where the mounting assembly includes a locking portion, the locking portion has at least a locking state and a release state relative to the base, when the locking portion is in the locking state, the storage container is configured to be fixedly connected to the base, and when the locking portion is in the release state, the storage container is configured to be movable relative to the base and removable from the base.

In some examples, the storage container further includes a coupling portion, the coupling portion is mounted to the adjustment portion, and the coupling portion is guided by the adjustment portion to move on the base.

In some examples, the base is provided with an abutting portion that mates with the locking portion, when the locking portion contacts the abutting portion, the storage container and the base remain relatively fixed, and when the locking portion is separated from the abutting portion, the storage container is separated from the base and moves.

In some examples, the base is provided with an abutting portion that mates with the locking portion, and on a plane formed along an up and down direction of the base and a front and rear direction of the base, a projection of the adjustment portion is arc-shaped, and a projection of the abutting portion is arc-shaped.

In some examples, the storage container includes an operation portion, a body portion, an engagement portion, and the locking portion, the engagement portion is configured to be coupled to the item, the body portion is connected to the base, and the locking portion is configured to move together with the operation portion.

In some examples, the operation portion is located at an upper end of the body portion.

In some examples, when the storage container is mounted on the base, the operation portion is pressed so that the locking portion is separated from the base, and after the storage container is guided by the adjustment portion to move to the second position, the operation portion is released so that the locking portion abuts against the base.

In some examples, the storage system further includes an elastic member, where one end of the elastic member abuts against an operation member, and the other end of the elastic member abuts against the body portion, when the operation member is driven to move, the elastic member is deformed under force, and the locking portion moves away from the elastic member in this case, and when an external force on the operation portion is removed, the elastic member recovers from the deformation, and the locking portion moves toward the elastic member in this case.

In some examples, the operation portion and the locking portion are integrally formed.

In some examples, the engagement portion is configured to have a folded state and a use state relative to the body portion, when the engagement portion is in the folded state, the engagement portion is folded upward, and when the engagement portion is in the use state, the engagement portion is configured to be capable of being coupled to the item.

In some examples, the storage system further includes a mounting assembly, where the adjustment portion is an elongated slotted hole provided on a body portion, and the mounting assembly extends through the slotted hole and is connected to the base.

In some examples, the storage system further includes a mounting assembly, where the adjustment portion is an elongated through hole provided on the base, and the mounting assembly extends through the body portion and is connected to the through hole of the base.

In some examples, the storage system further includes a mounting assembly, where the mounting assembly and the base are capable of adopting one or a combination of a clamp, a screw, a snap, an insert pin, and a mortise and tenon.

In some examples, the storage container further includes a coupling portion, a body portion, and a mounting assembly, the mounting assembly includes a locking portion that are capable of mating with an abutting portion on the base, and when the storage container is connected to the base, the locking portion is configured to be capable of being driven to rotate away from the body portion until the locking portion is separated from the abutting portion, and the storage container is allowed to be removed in this case.

In some examples, the mounting assembly includes a locking member connected to the locking portion, and the locking member is made of an elastic material.

In some examples, the locking member is an elastic tab connected to the body portion.

In some examples, the mounting assembly further includes a reset member, one end of the reset member abuts against a locking member, and the other end of the reset member abuts against the body portion, after the coupling portion is engaged with the adjustment portion, the locking member is driven to cause the locking portion to rotate away from the body portion, and until the locking portion is lower than the abutting portion, a force applied to the locking member is removed to cause the locking portion to rotate toward the body portion under action of the reset member until the locking portion contacts the abutting portion.

In some examples, the storage container further includes a coupling portion and a locking portion that mate with the base, a body portion connected to the coupling portion, and at least one stop portion, and the at least one stop portion is configured to mate with a limiting portion formed on the body portion to cause the locking portion to move within a preset range.

A movement method of a wall-mountable storage system is provided. The wall-mountable storage system includes: a base having a rail extending along a direction; and a storage container configured to be coupled to an item. The storage container includes: an engagement portion configured to be coupled to the item; a body portion configured to be connected to the base; a coupling portion connected to the body portion; a locking portion mating with the base; and an operation portion driving the locking portion to be separated from or connected to the base.

The movement method includes the following steps: driving the operation portion to move to cause the locking portion to be separated from the base. The movement method includes the following steps: driving the operation portion to move to cause the locking portion to be separated from the base; moving the storage container to a preset position along the rail of the base; and releasing an operation member to cause the locking portion to be connected to the base.

A mounting method of a wall-mountable storage system is provided. The wall-mountable storage system includes: a base having a rail extending along a direction; and a storage container configured to be coupled to an item. The storage container includes: an engagement portion configured to be coupled to the item; a body portion configured to be connected to the base; a coupling portion connected to the body portion; a locking portion mating with the base; and an operation portion driving the locking portion to be separated from or connected to the base. The mounting method includes the following steps: driving the storage container to insert the coupling portion into the rail; driving the operation portion to move and rotating the body portion simultaneously until the locking portion rotates to a lower end of the base; and releasing the operation portion to cause the locking portion to be connected to the base.

A wall-mountable storage system includes: a base detachably connected to a wall surface; and a storage container configured to be coupled to an item. The storage container is configured to move relative to the base, and in a process where the storage container moves relative to the base, the storage container is connected to the base. The storage container includes a first-type storage container and a second-type storage container, the first-type storage container is mounted at a first position on the base, the second-type storage container is mounted at a second position on the base, and the first-type storage container is configured to be removed from the first position.

A handcart includes the storage system in any one of the preceding examples.

A toolbox system includes the storage system in any one of the preceding examples.

The present application has the following benefit: the present application provides the storage system that facilitates the movement of the storage container relative to the base.

### BRIEF DESCRIPTION OF DRAWINGS

FIG. 1 is a schematic view showing a use condition in which an item is coupled to a storage system in the present application, where a storage container is a twelfth example and a base is an eighth example.
FIG. 2 is a schematic view showing that some items are coupled to a storage system in the present application, where a storage container is a first example and a base is a first example.
FIG. 3 is a schematic view showing that the storage container is coupled to the base in the storage system shown in FIG. 2, where the storage container is in a second use state, and an engagement portion is in a use state in this case.
FIG. 4 is a schematic view showing that the storage container is coupled to the base in the storage system shown in FIG. 2, where the storage container is in a second use state, and an engagement portion is in a folded state in this case.
FIG. 5 is a sectional view along direction A-A in the schematic view shown in FIG. 4.
FIG. 6 is a schematic view showing that a coupling portion on the storage container and an adjustment portion on the base in FIG. 4 are connected to each other, where the storage container is in a first use state, and an engagement portion is in a folded state in this case.
FIG. 7 is a sectional view along direction B-B in the schematic view shown in FIG. 6.
FIG. 8 is a schematic view showing that the storage container and the base in FIG. 4 are separated from each other, where the storage container is in a third use state in this case.
FIG. 9 is a schematic view showing that a front housing and the storage container in

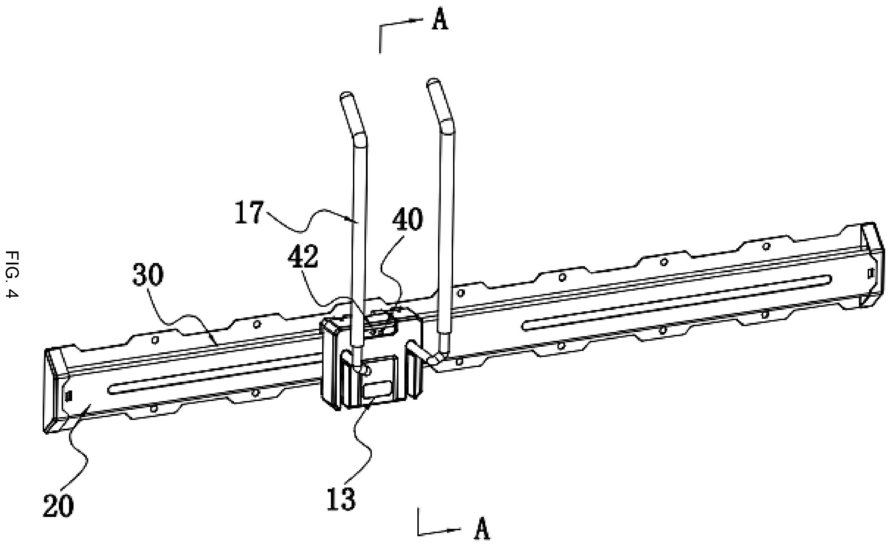

FIG. 4 are separated from each other.

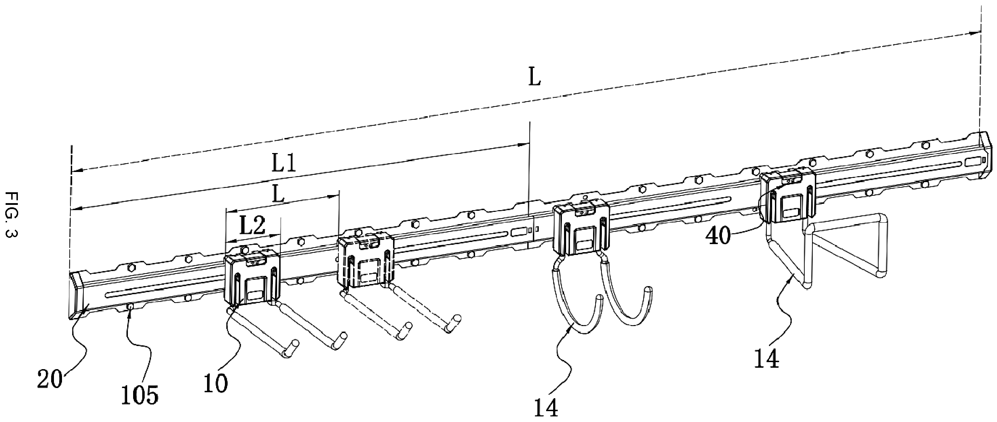

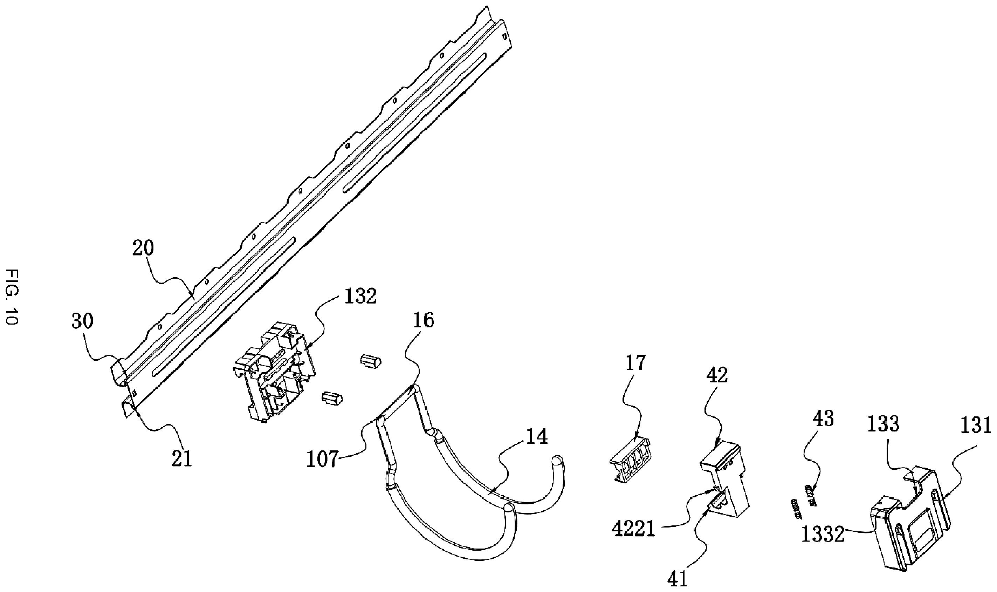

FIG. 10 is an exploded view of the storage container and the base shown in FIG. 3.

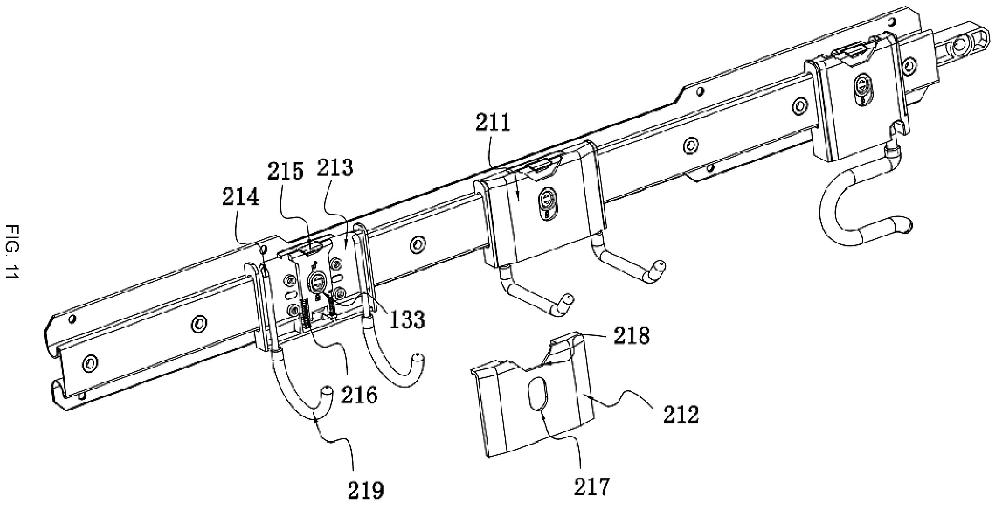

FIG. 11 is a schematic view showing that a storage system is coupled to a base in the storage system according to the present application, where a storage container is a first example, and the base is a second example.

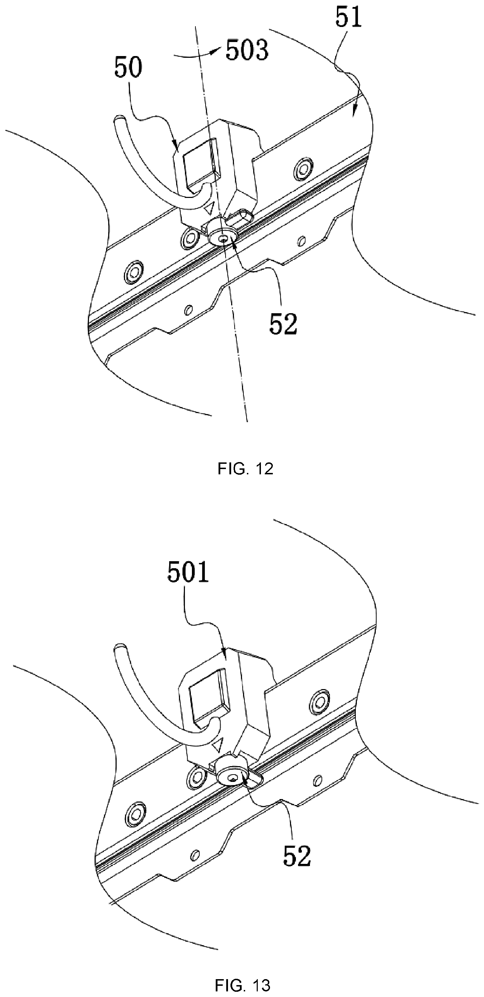

FIG. 12 is a schematic view showing that a storage system is coupled to a base in the storage system according to the present application, where a storage container is a fifth example, and the base is a third example.
FIG. 13 is a schematic view showing that a mounting assembly shown in FIG. 12 is switched to a locking state.

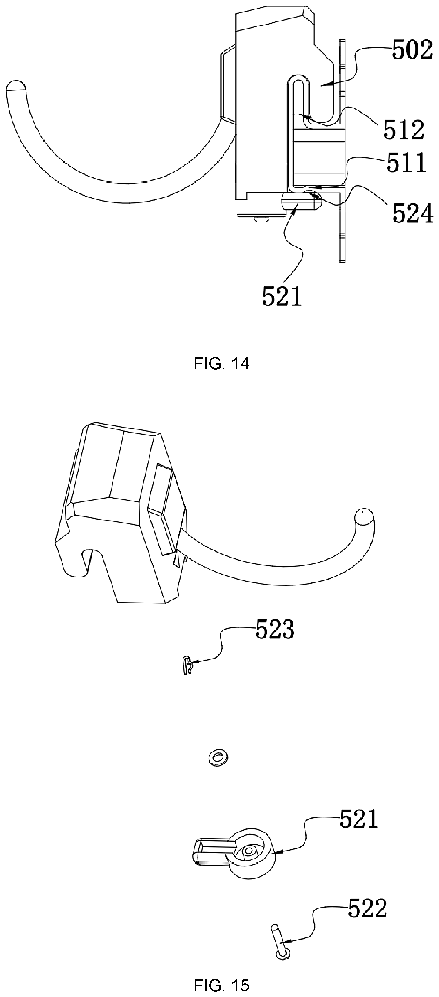

FIG. 14 is a plan view of the storage container, the base, and a mounting assembly shown in FIG. 12.
FIG. 15 is an exploded view of the storage container shown in FIG. 12.

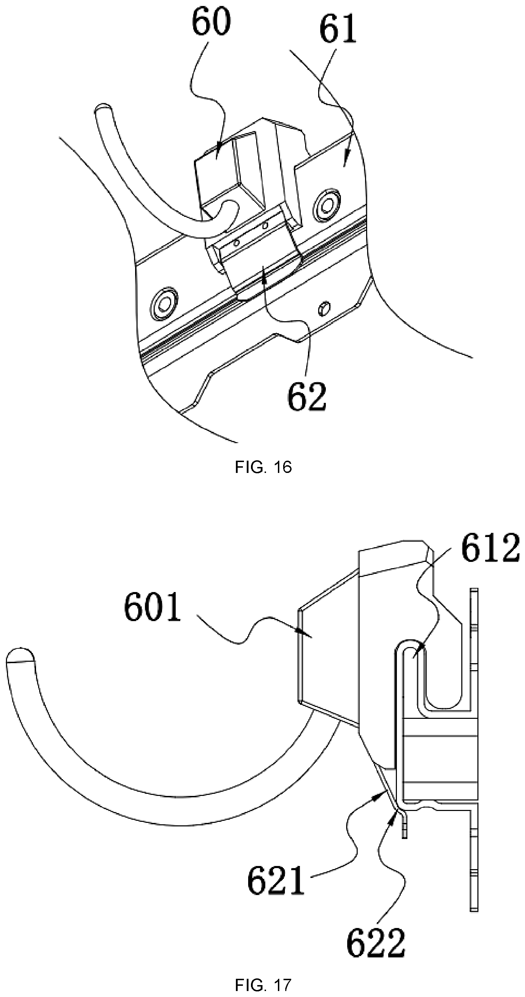

FIG. 16 is a schematic view showing that a storage system is coupled to a base in the storage system according to the present application, where a storage container is a sixth example, and the base is a third example.
FIG. 17 is a plan view of the storage container, the base, and a mounting assembly shown in FIG. 16.

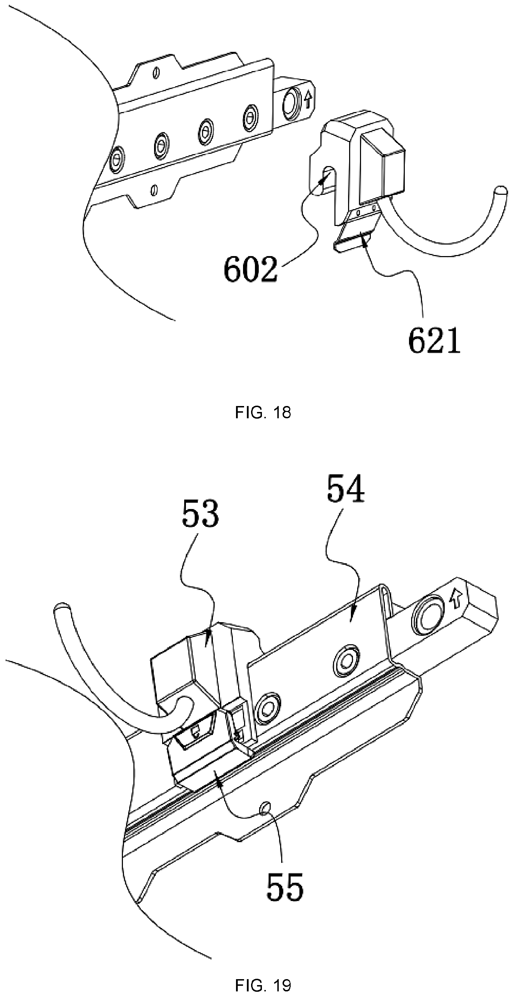

FIG. 18 is a partial schematic view showing that the storage container and the base shown in FIG. 16 are separated from each other.
FIG. 19 is a schematic view showing that a storage system is coupled to a base in the storage system according to the present application, where a storage container is a seventh example, and the base is a third example.

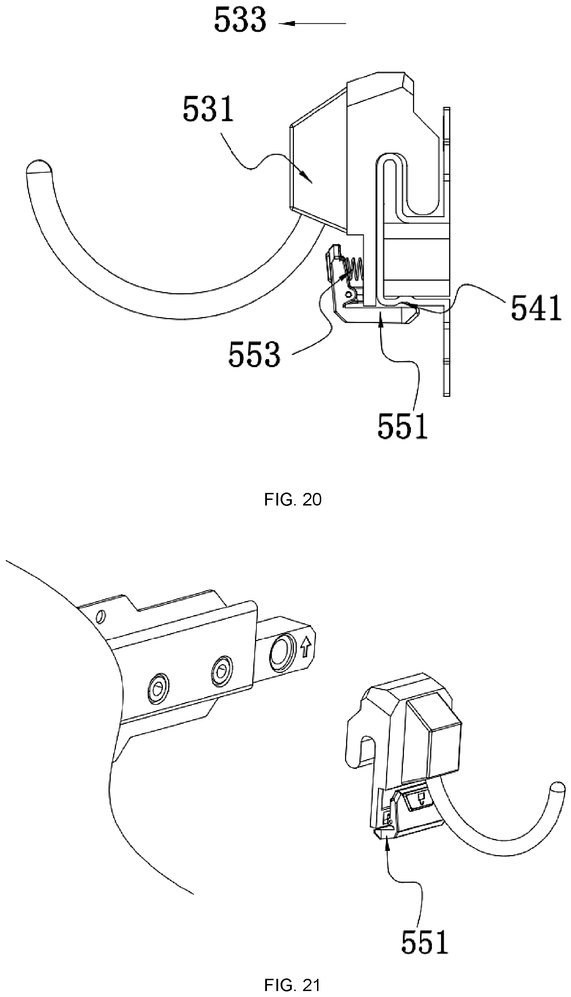

FIG. 20 is a plan view of the storage container, the base, and a mounting assembly shown in FIG. 19.
FIG. 21 is a schematic view showing that the storage container and the base shown in
FIG. 19 are separated from each other.

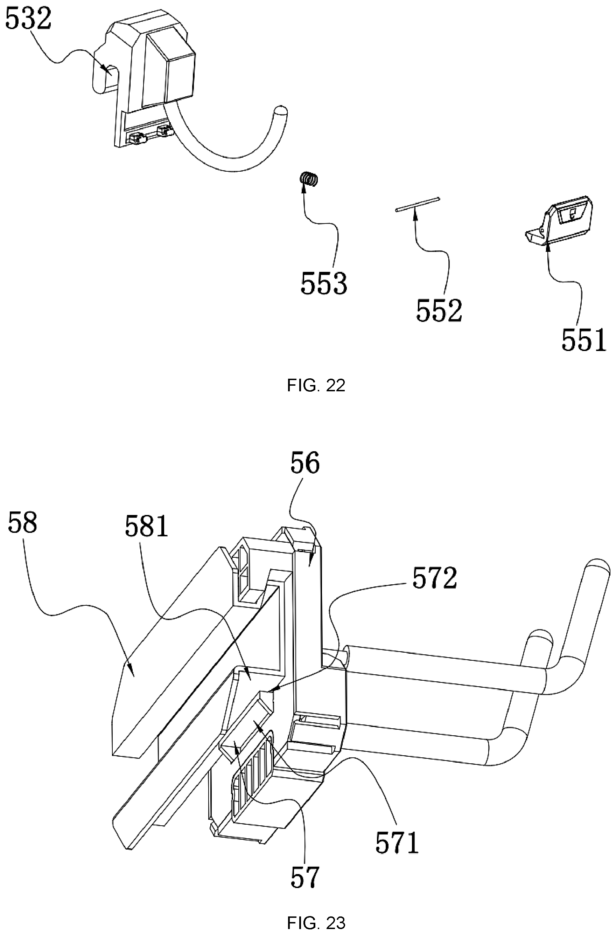

FIG. 22 is an exploded view of the storage container shown in FIG. 19.
FIG. 23 is a schematic view showing that a storage system is coupled to a base in the storage system according to the present application, where a storage container is an eighth example, and the base is a fourth example.

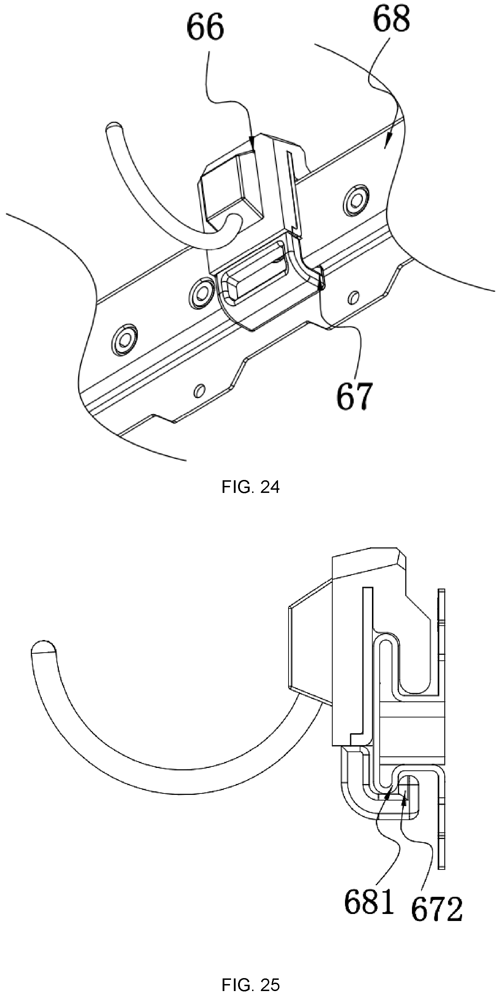

FIG. 24 is a schematic view showing that a storage system is coupled to a base in the storage system according to the present application, where a storage container is a tenth example, and the base is a sixth example.
FIG. 25 is a plan view of the base, the storage container, and a mounting assembly shown in FIG. 24.

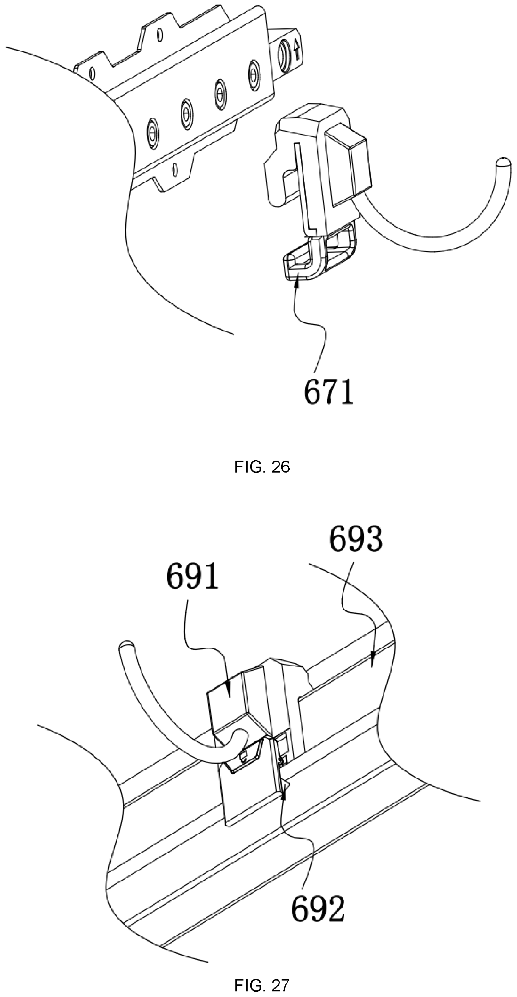

FIG. 26 is a schematic view showing that the storage container and the base shown in FIG. 24 are separated from each other.
FIG. 27 is a schematic view showing that a storage system is coupled to a base in the storage system according to the present application, where a storage container is an eleventh example, and the base is a seventh example.

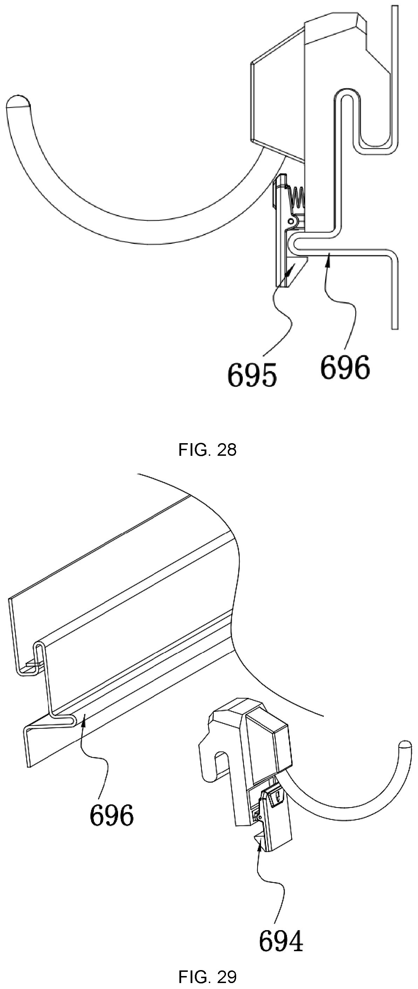

FIG. 28 is a plan view of the base, the storage container, and a mounting assembly shown in FIG. 27.
FIG. 29 is a schematic view showing that the storage container and the base shown in FIG. 27 are separated from each other.

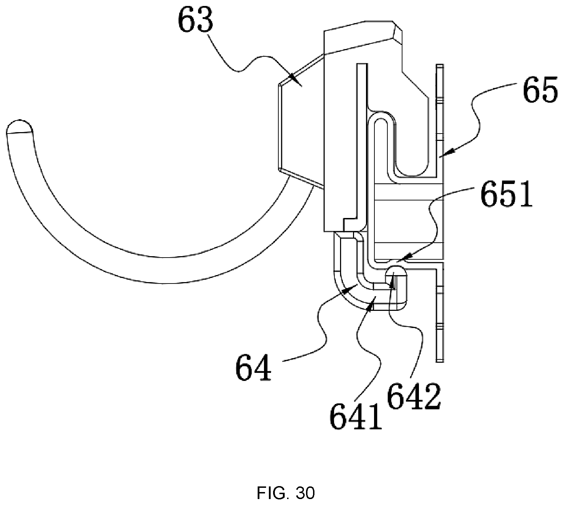

FIG. 30 is a schematic view showing that a storage system is coupled to a base in the storage system according to the present application, where a storage container is a ninth example, and the base is a fifth example.

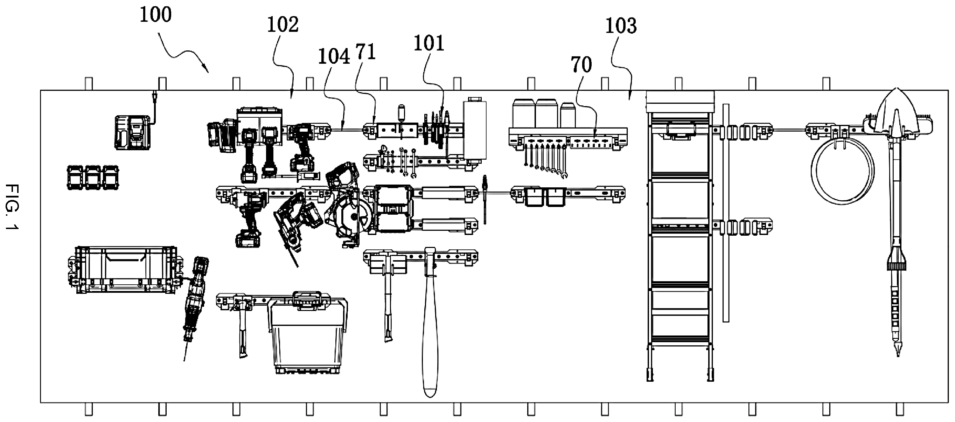

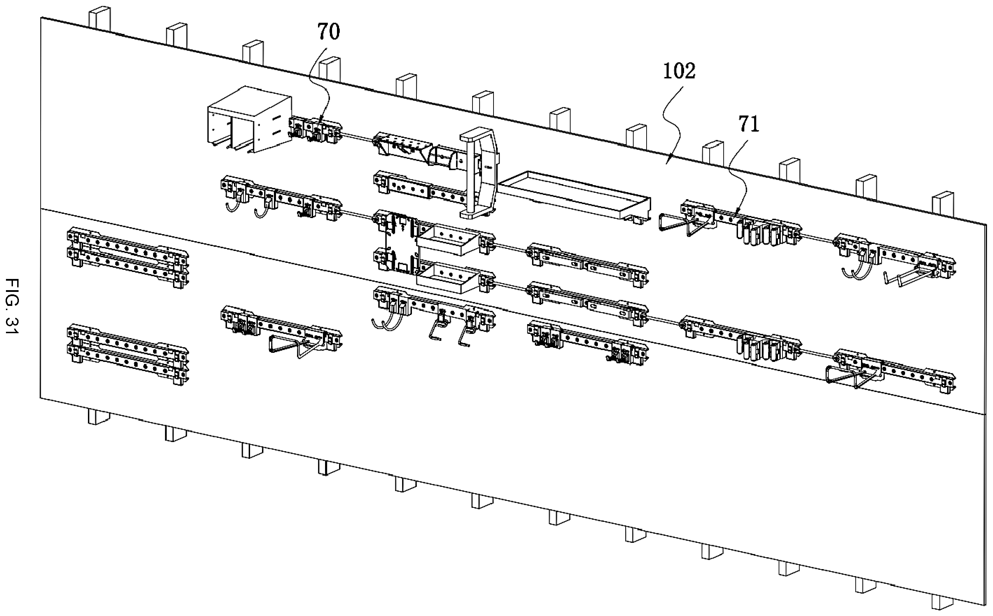

FIG. 31 is a schematic view showing the storage system in FIG. 1 after removal of the item.

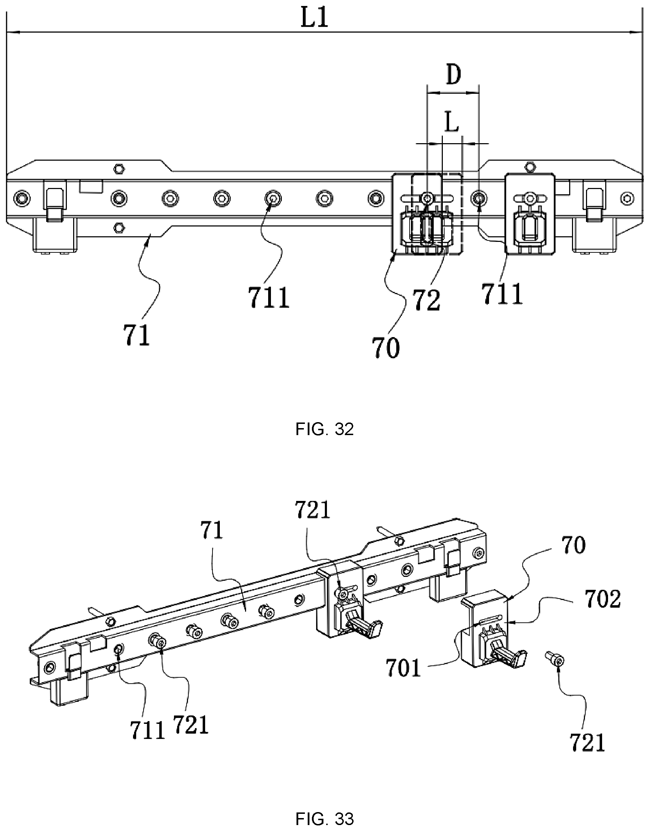

FIG. 32 is a schematic view showing some structures in the storage system shown in FIG. 31.
FIG. 33 is a schematic view showing that a storage container, a mounting assembly, and a base shown in FIG. 32 are separated from each other.

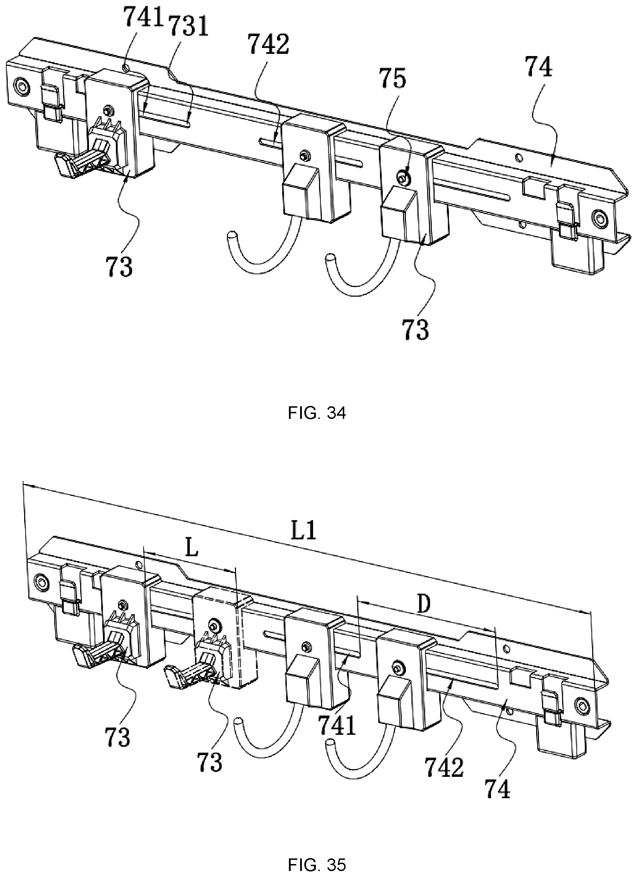

FIG. 34 is a schematic view showing that a storage system is coupled to a base in the storage system according to the present application, where a storage container is a thirteenth example, and the base is a ninth example.
FIG. 35 is a schematic view showing that the storage container shown in FIG. 34 is guided by an adjustment portion to slide relative to the base.

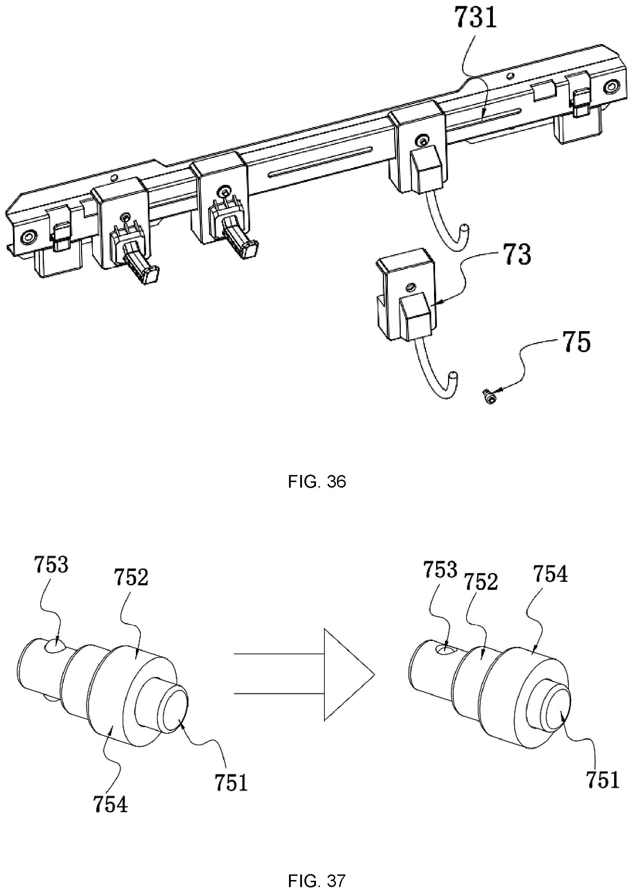

FIG. 36 is a schematic view showing that the storage container, a mounting assembly, and the base shown in FIG. 34 are separated from each other.
FIG. 37 is a schematic view showing that the mounting assembly shown in FIG. 36 is switched from an abutting state to an avoidance state.

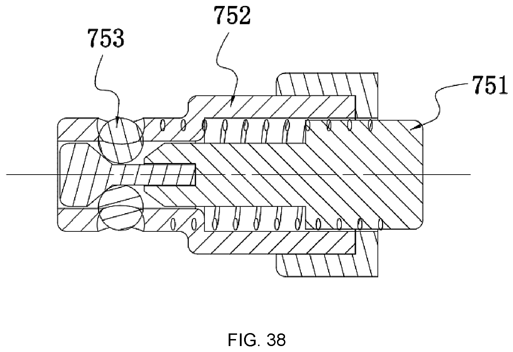

FIG. 38 is a sectional view of the mounting assembly shown in FIG. 37 in the avoidance state.

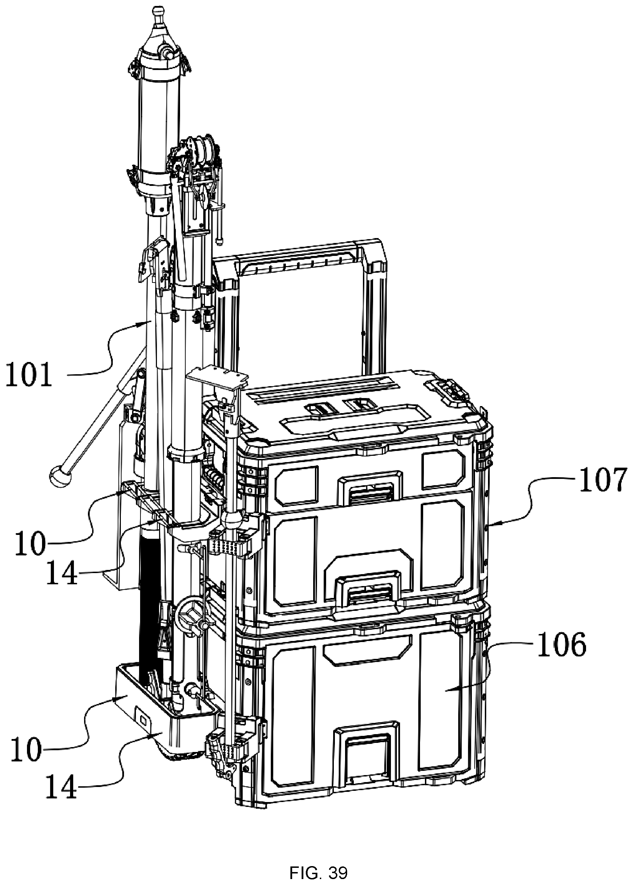

FIG. 39 is a schematic view showing that an item is coupled to a toolbox system through a storage container and a base.

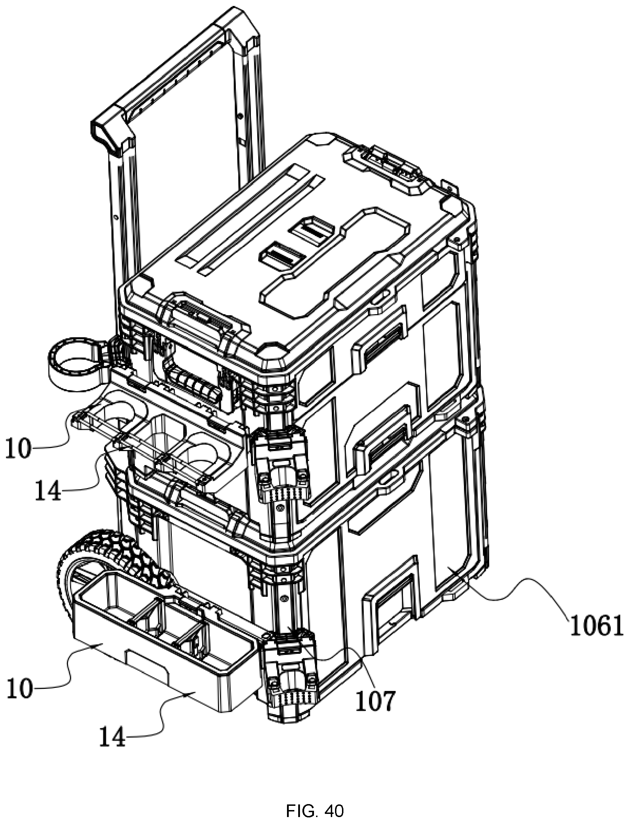

FIG. 40 is a schematic view showing that the storage container and the base shown in FIG. 39 are coupled to the toolbox system.

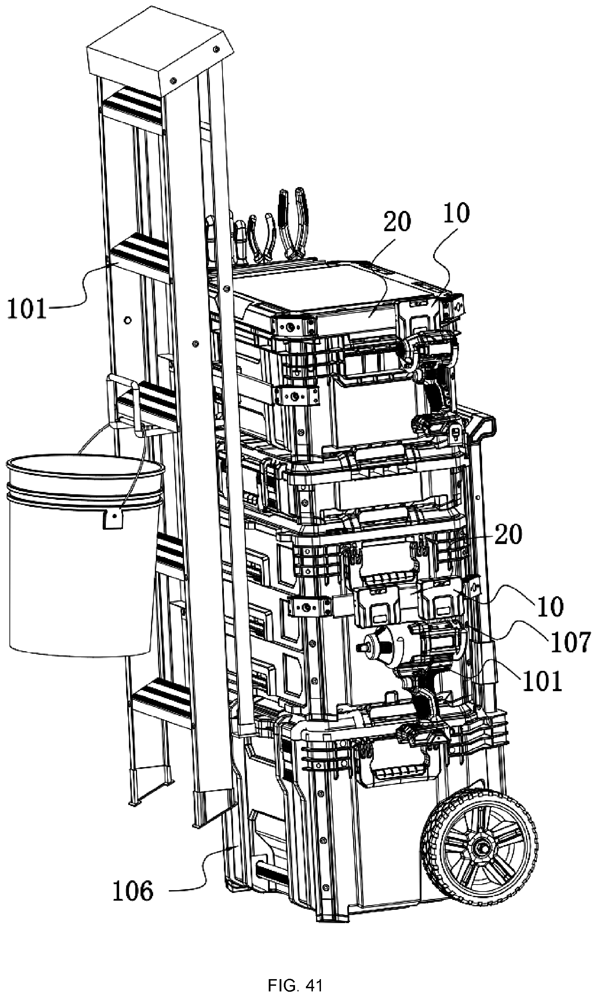

FIG. 41 is a schematic view showing that an item is coupled to a toolbox system through a storage container and a base.

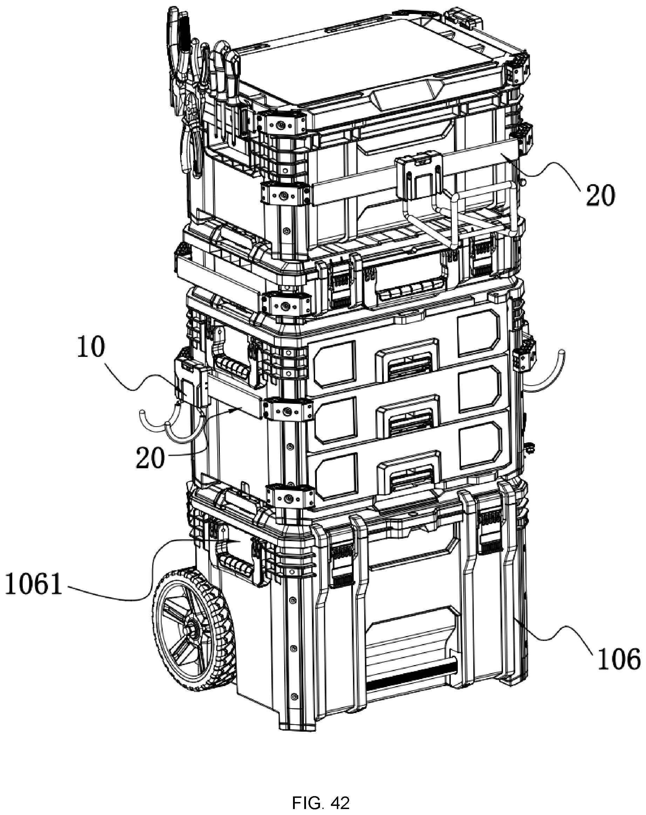

FIG. 42 is a schematic view showing that the storage container and the base shown in FIG. 41 are coupled to the toolbox system.

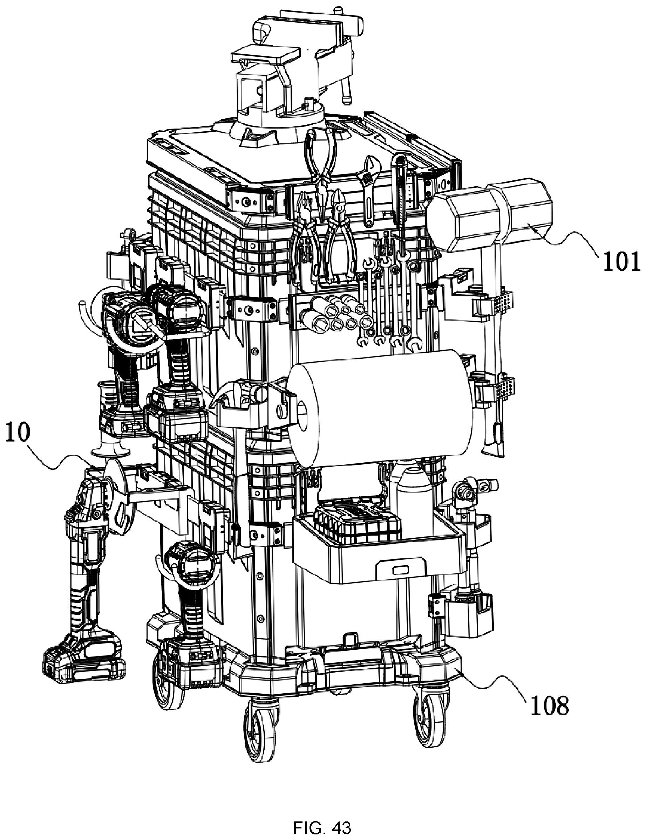

FIG. 43 is a schematic view showing that an item is coupled to a platform cart system through a storage container and a base.

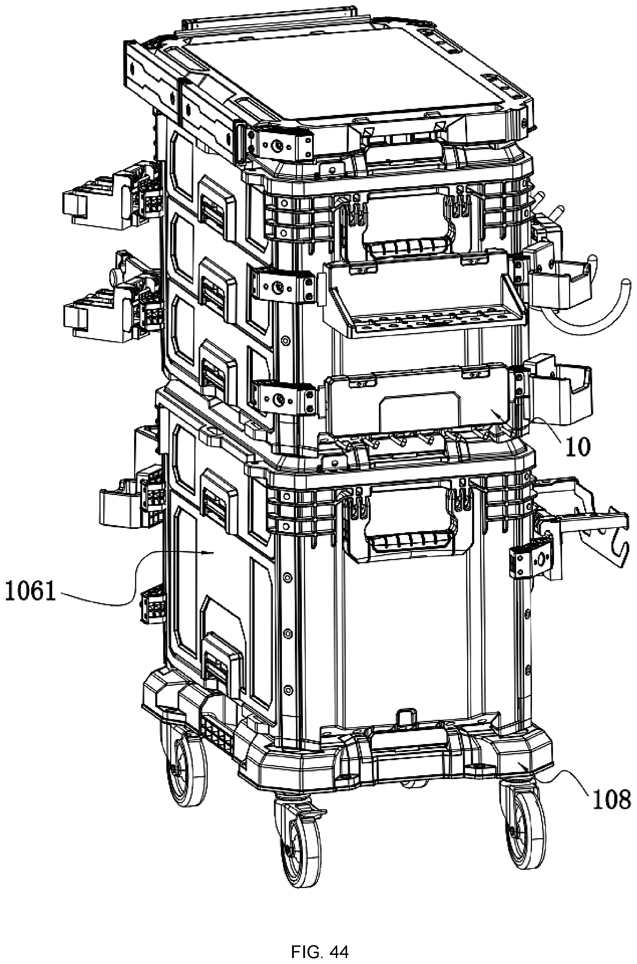

FIG. 44 is a schematic view showing that the storage container and the base shown in FIG. 43 are coupled to the platform cart system.

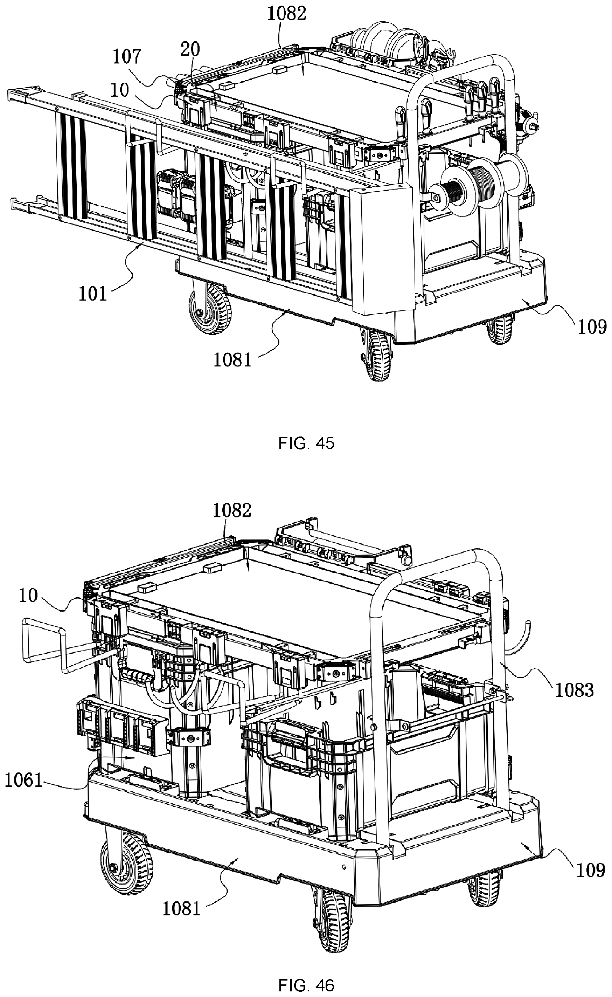

FIG. 45 is a schematic view showing that an item is coupled to a handcart system through a storage container and a base.
FIG. 46 is a schematic view showing that the storage container and the base shown in FIG. 45 are coupled to the handcart system.

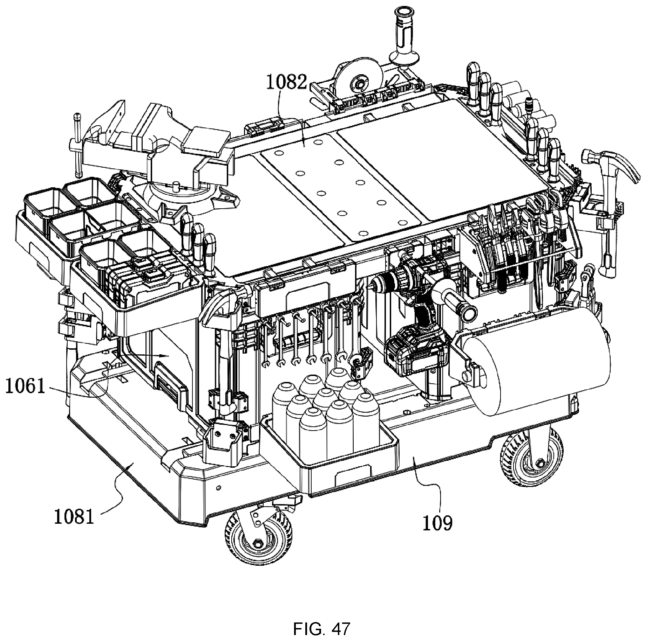

FIG. 47 is a schematic view showing that an item is coupled to a cart system through a storage container and a base.

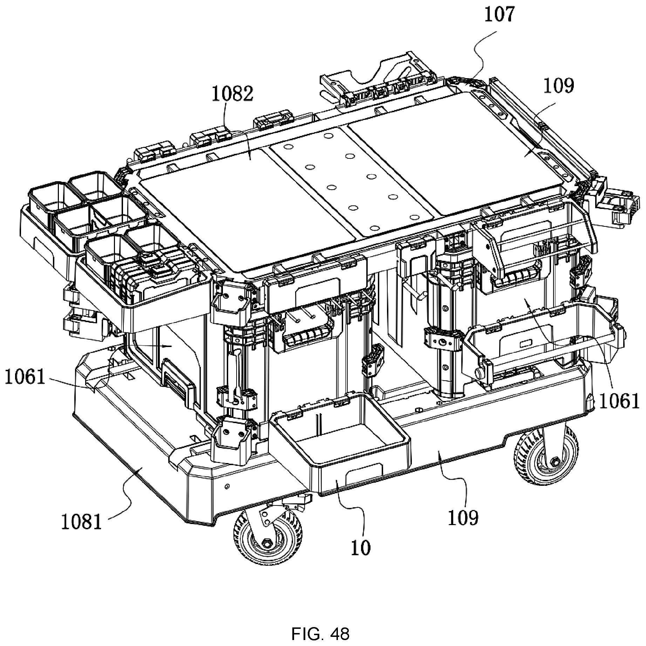

FIG. 48 is a schematic view showing that the storage container and the base shown in FIG. 47 are coupled to the cart system.

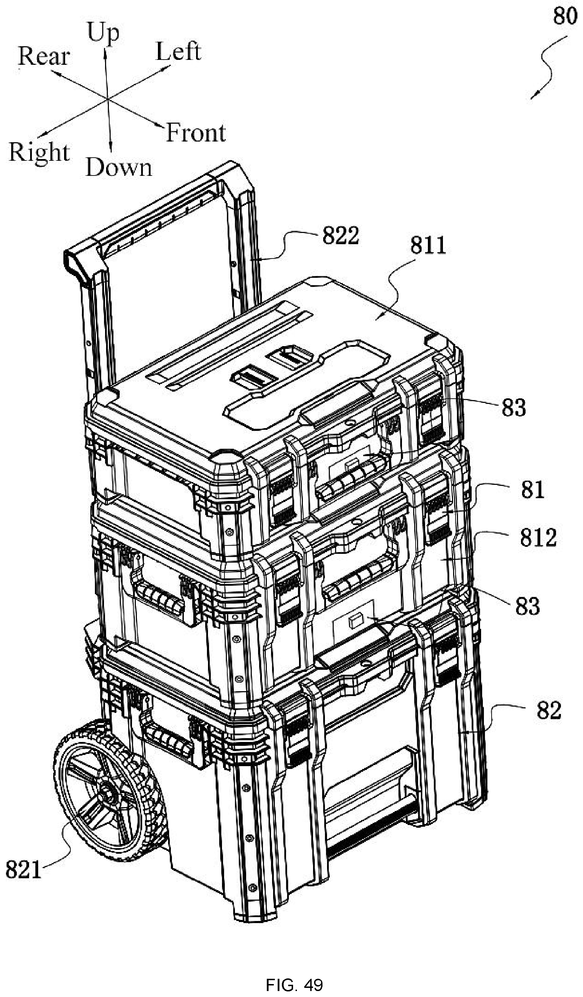

FIG. 49 is a schematic view showing a use state of a first-type toolbox and a second-type toolbox in a toolbox system.

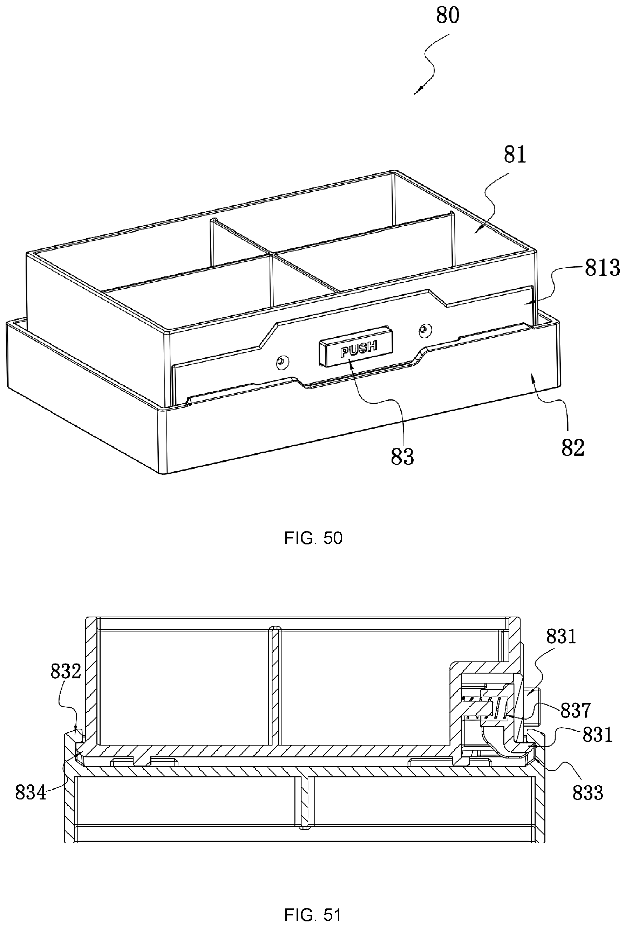

FIG. 50 is a schematic view showing another use state of a first-type toolbox and a second-type toolbox in a toolbox series.
FIG. 51 is a cross-sectional view of the toolbox series shown in FIG. 50, where a first connecting member is coupled to a first adapter, and a second connecting member is coupled to a second adapter.

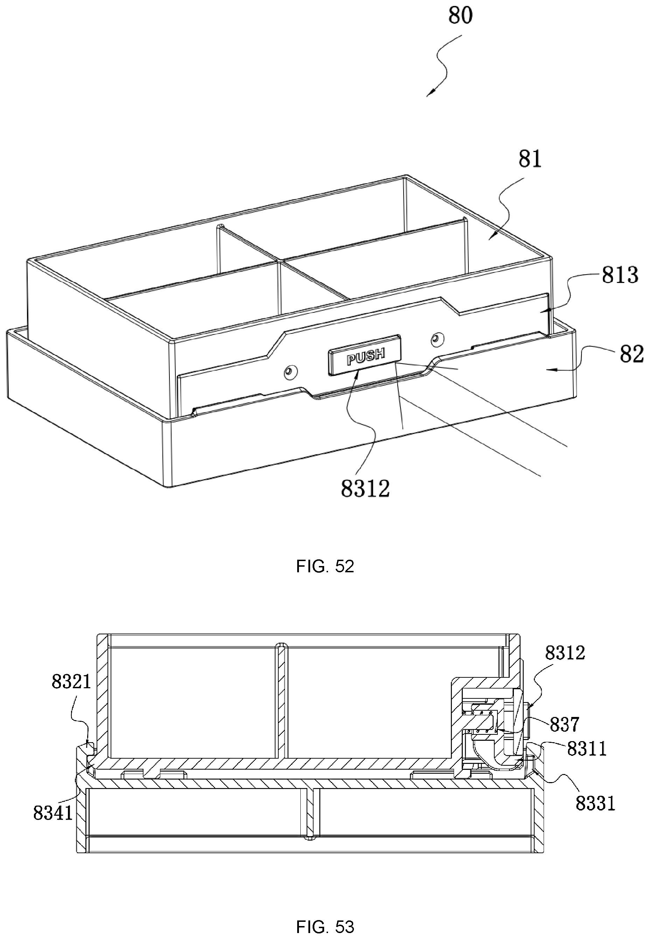

FIG. 52 is a schematic view showing that an operation member in the toolbox series shown in FIG. 50 is pressed.
FIG. 53 is a cross-sectional view of the schematic view shown in FIG. 52.

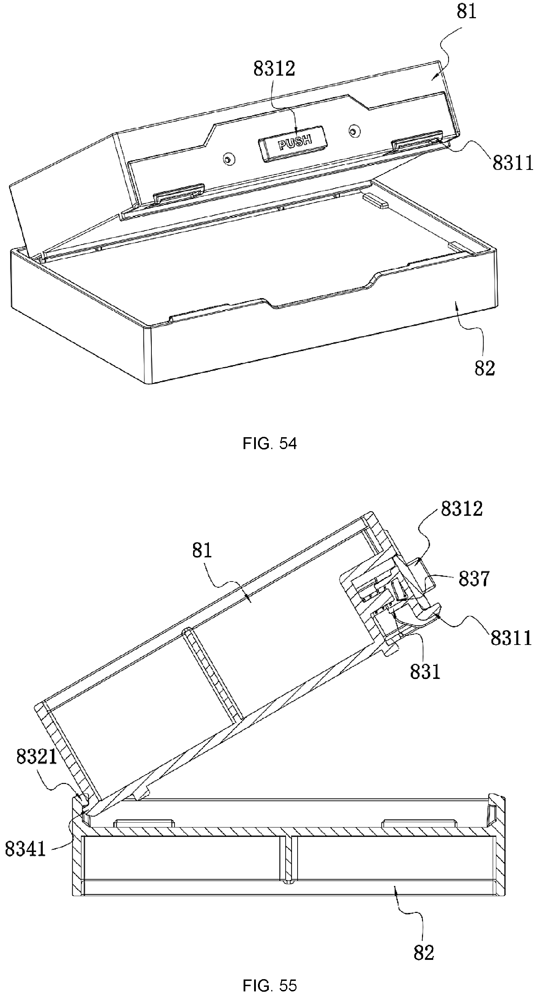

FIG. 54 is a schematic view showing that one end of the first-type toolbox in the toolbox series shown in FIG. 50 is rotated upward by a preset angle, where a first connecting member is separated from a first adapter, and a second connecting member contacts a second adapter in this case.
FIG. 55 is a cross-sectional view of the schematic view shown in FIG. 54.

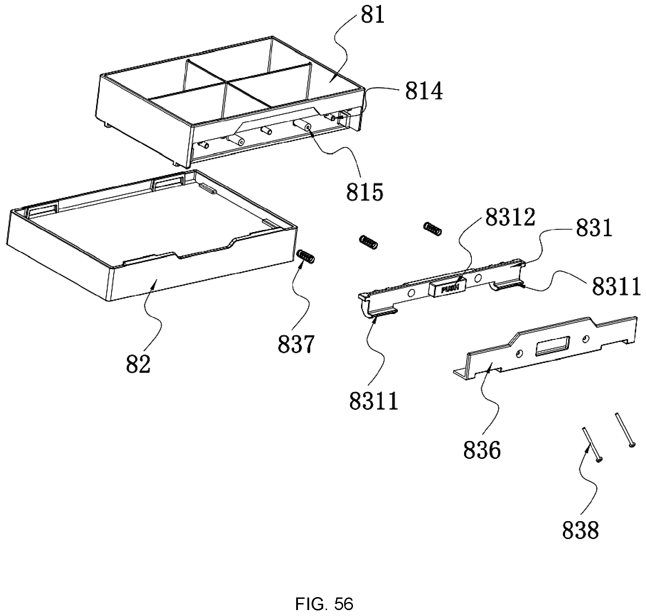

FIG. 56 is a schematic view showing that the first-type toolbox, the second-type toolbox, and a connecting device shown in FIG. 50 are separated from each other.

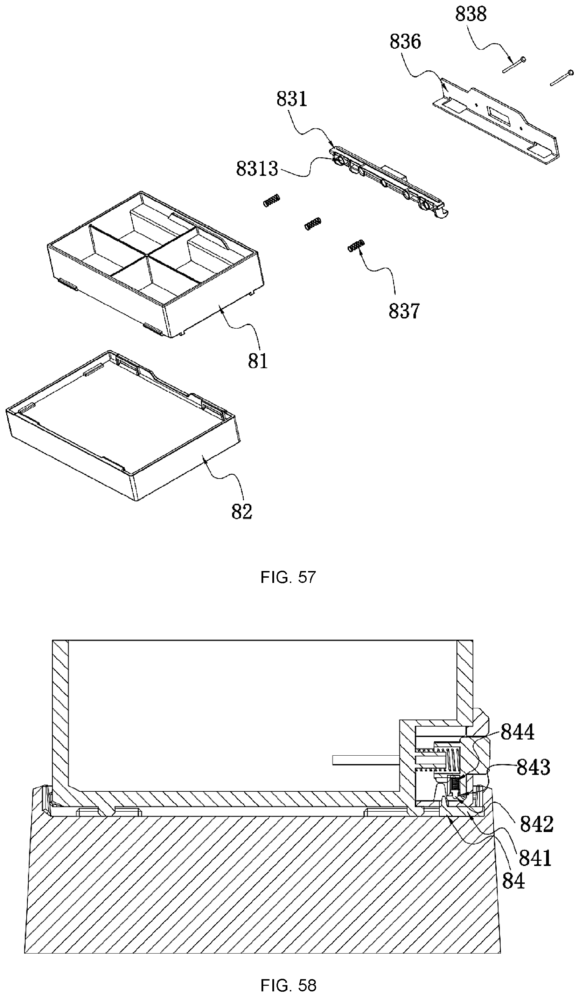

FIG. 57 is a schematic view from another viewing angle showing that the first-type toolbox, the second-type toolbox, and the connecting device shown in FIG. 56 are separated from each other.
FIG. 58 is a cross-sectional view showing a connecting device shown in FIG. 51 with a retaining assembly added thereto, where a movable member is separated from a stop member in this case.

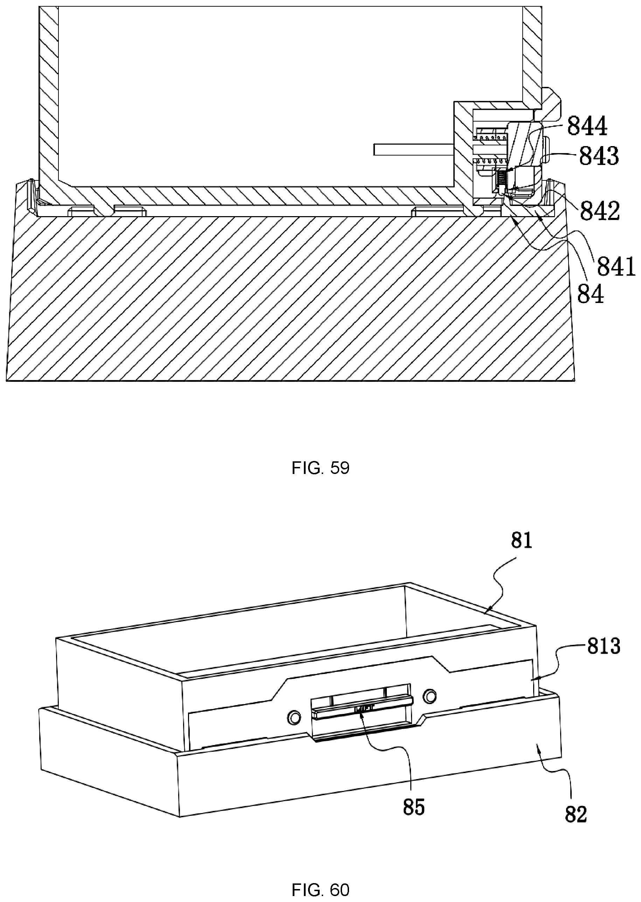

FIG. 59 is a cross-sectional view of the connecting device in FIG. 58, where a first connecting member moves to a preset position, and the movable member abuts against the stop member in this case.
FIG. 60 is a schematic view showing another structural configuration of a connecting device in a toolbox series of the present application.

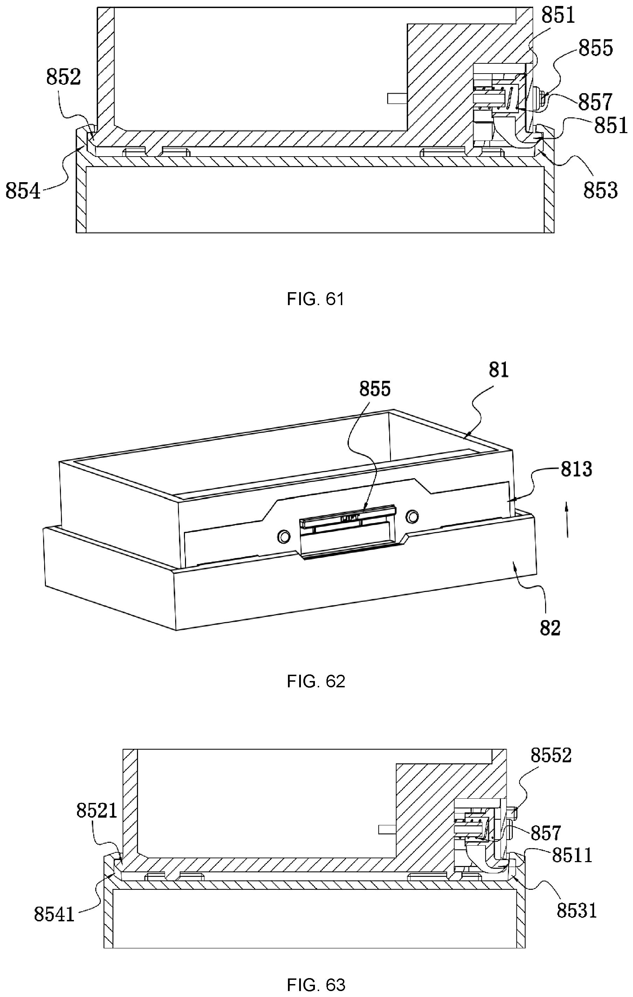

FIG. 61 is a cross-sectional view of the schematic view shown in FIG. 60.
FIG. 62 is a schematic view showing that an operation member is moved upward in the toolbox series shown in FIG. 60, where a first connecting member is separated from a first adapter in this case.
FIG. 63 is a cross-sectional view of the schematic view shown in FIG. 62.

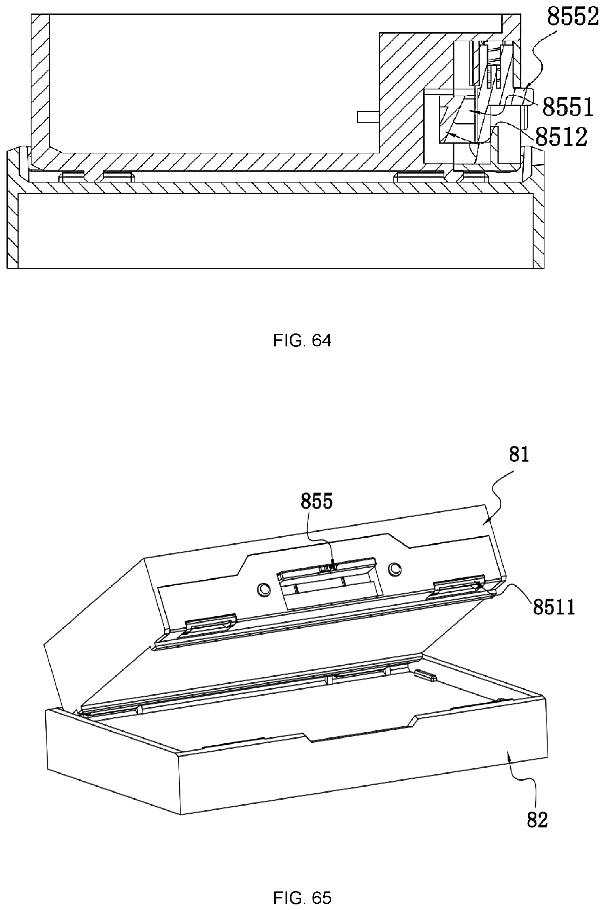

FIG. 64 is a cross-sectional view of the schematic view shown in FIG. 14.
FIG. 65 is a schematic view showing that one end of a first-type toolbox in the toolbox series shown in FIG. 60 is rotated upward by a preset angle, where a first connecting member is separated from a first adapter, and a second connecting member contacts a second adapter in this case.

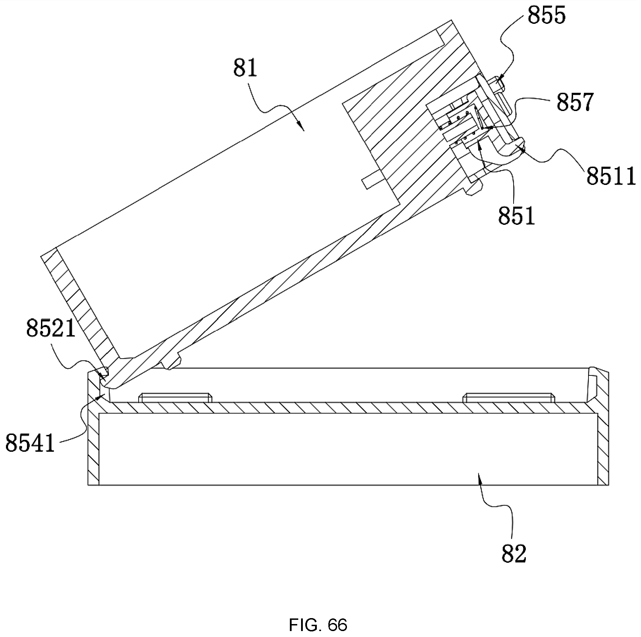

FIG. 66 is a cross-sectional view of the schematic view shown in FIG. 65.

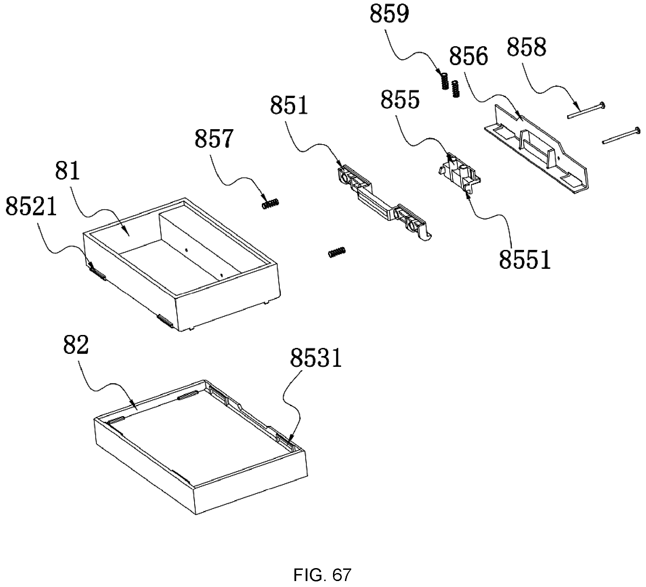

FIG. 67 is a schematic view showing that a first-type toolbox, a second-type toolbox, and the connecting device shown in FIG. 60 are separated from each other.

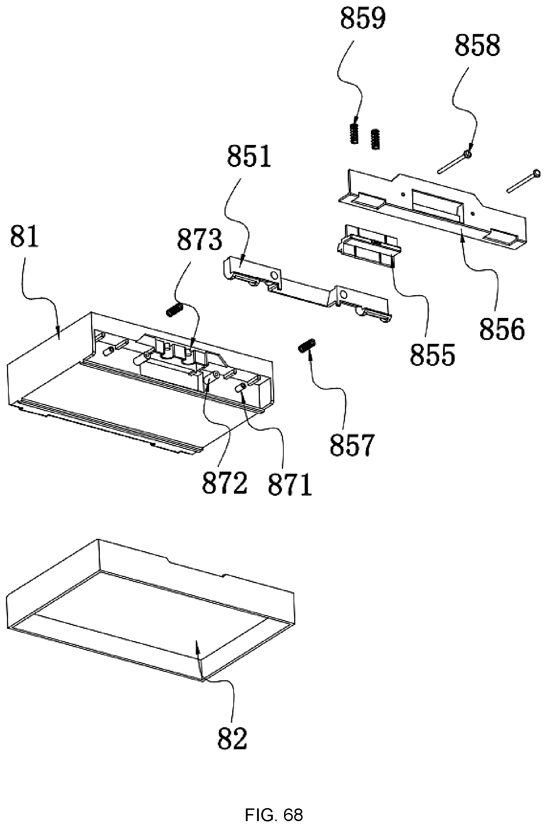

FIG. 68 is a schematic view from another viewing angle showing that the first-type toolbox, the second-type toolbox, and the connecting device shown in FIG. 67 are separated from each other.

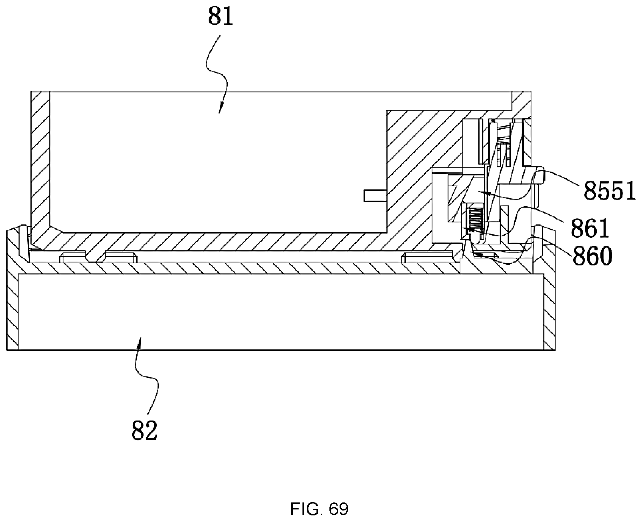

FIG. 69 is a cross-sectional view showing a connecting device shown in FIG. 16 with a retaining assembly added thereto, where a movable member abuts against a stop member in this case.

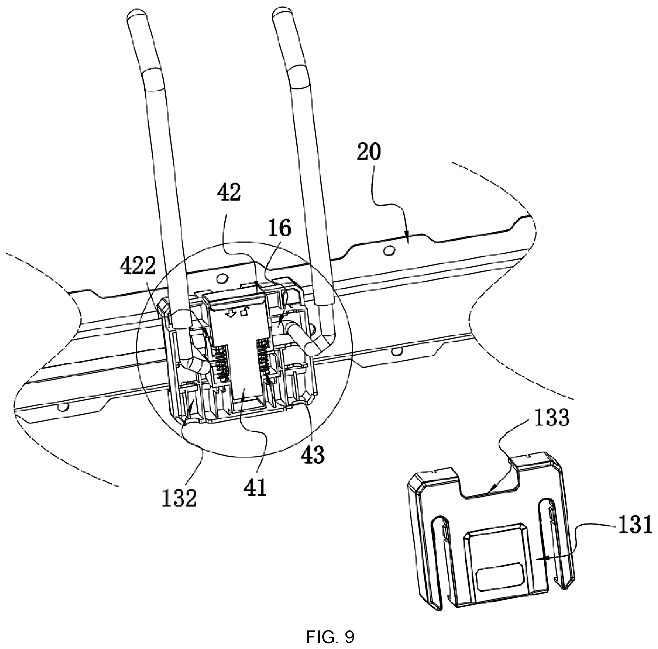

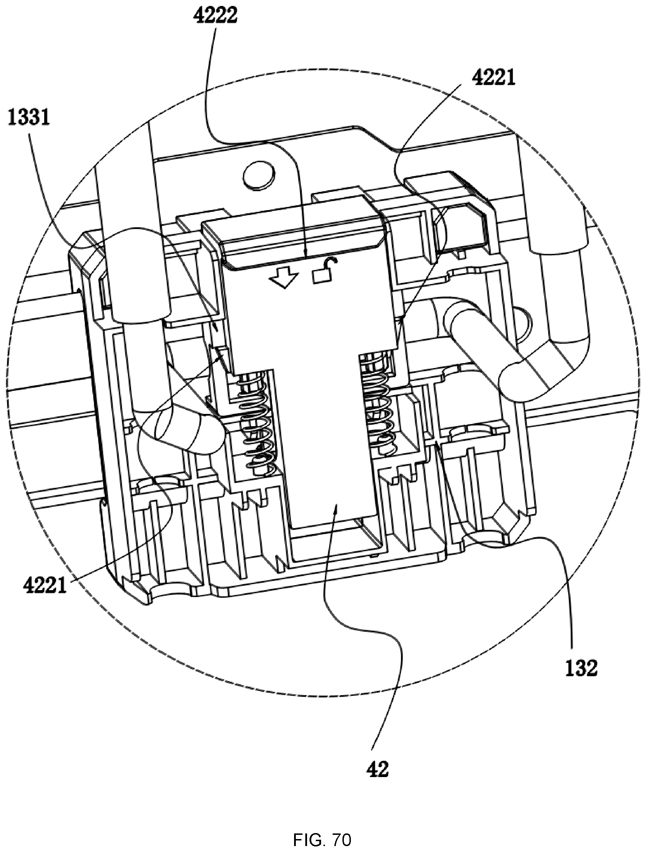

FIG. 70 is a partial enlarged view of the schematic view shown in FIG. 9.

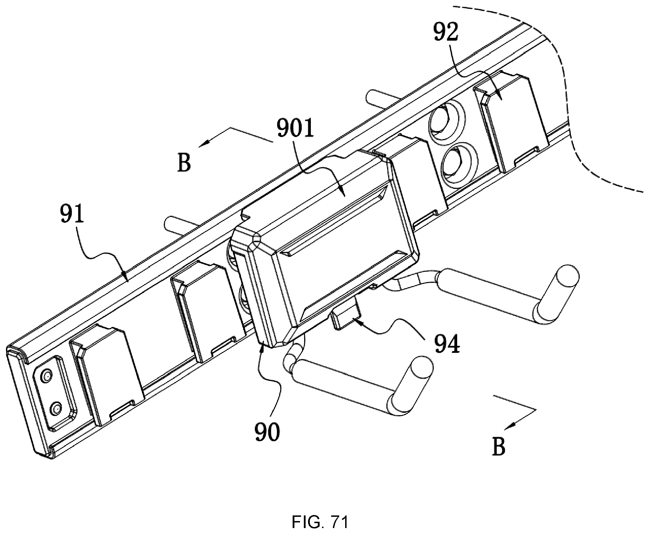

FIG. 71 is a schematic view showing that a storage system is coupled to a base in the storage system according to the present application, where a storage container is a fourteenth example, and the base is a tenth example.

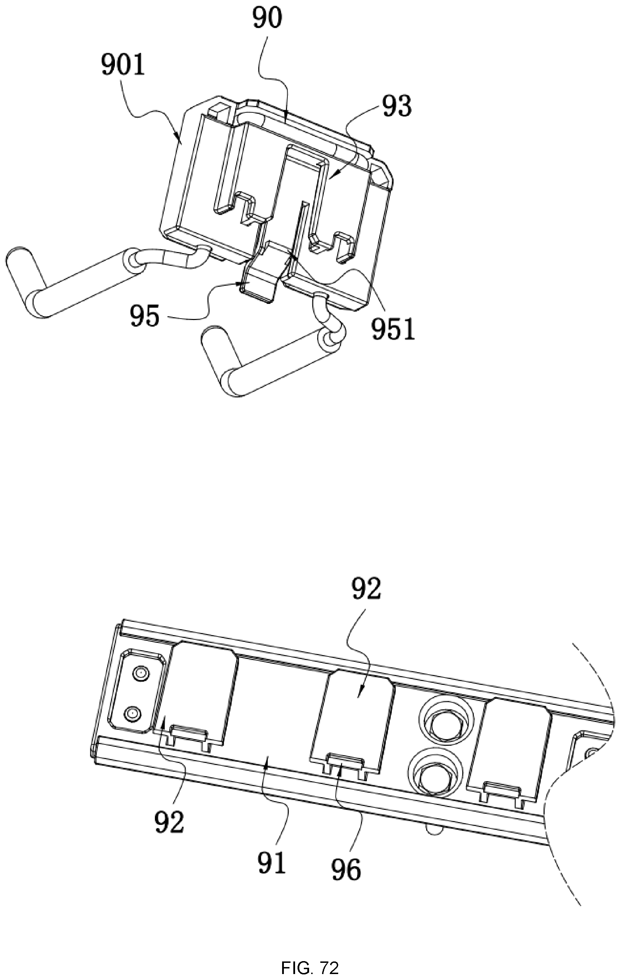

FIG. 72 is a schematic view showing that the storage container and the base shown in FIG. 71 are separated from each other.

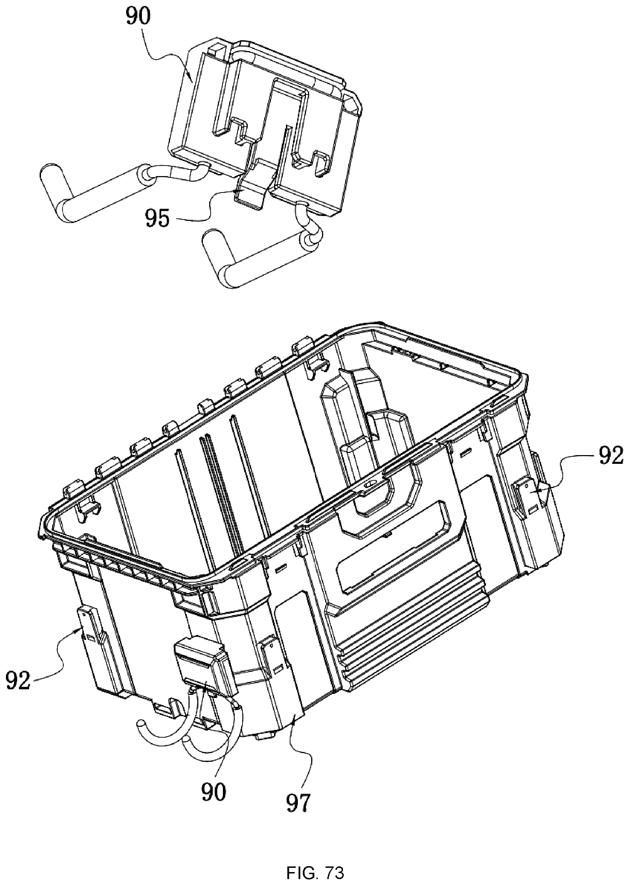

FIG. 73 is a schematic view showing that the storage container shown in FIG. 71 can be mounted on a toolbox.

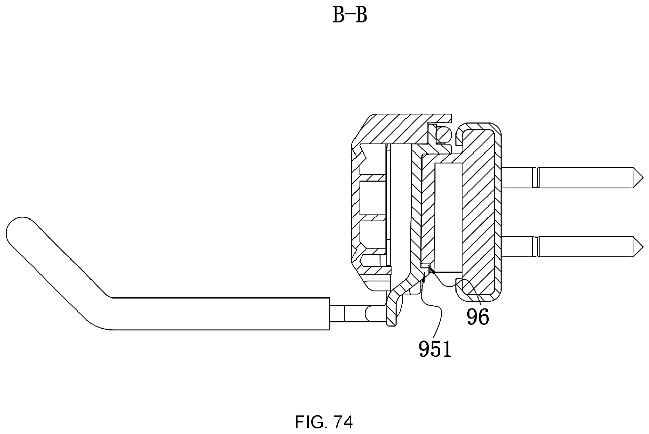

FIG. 74 is a sectional view along direction B-B showing that the storage container shown in FIG. 71 is mounted to the base.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

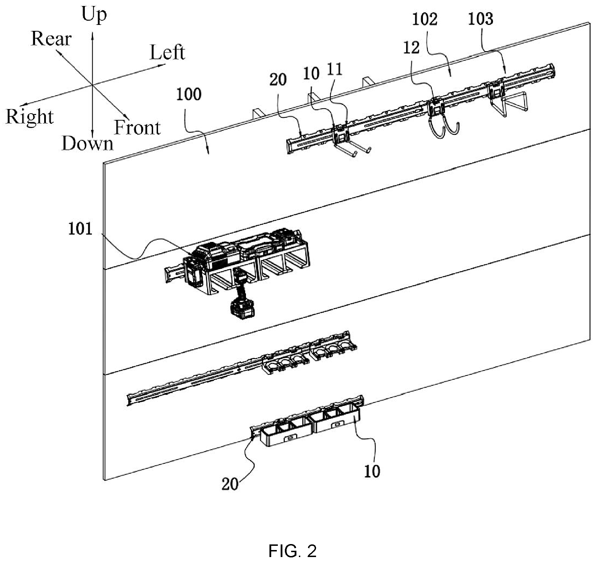

A wall-mountable storage system 100 is shown in FIGS. 1 and 2. The storage system 100 can connect the item 101. It is to be understood that the item 101 may be hung or fastened to the storage system 100. The item 101 here may be, but is not limited to, a power tool, a hand tool, a tool accessory, a garden tool, a storage bag, a storage box, a workbench, a power supply device, a charging device, a refrigeration apparatus, a heating apparatus, and a wireless apparatus.

To clearly illustrate the technical solutions of the present application, the directions such as up, down, front, rear, left, and right as shown in FIG. 3 are defined. It is to be noted that, unless otherwise specified, up and down, front and rear, and left and right are described below with respect to a state where the storage system 100 is mounted as shown in FIG. 2.

As shown in FIGS. 1 to 3, the storage system 100 may include a movable and fixed large mounting plate 102. The mounting plate 102 may be mounted on a wall or in other places as long as the mounting plate 102 can be fixed. A surface for mounting forms a wall surface 103, and multiple bases 20 may be mounted on the wall surface 103. The base 20 and the storage container 10 recorded in the present application may each be mounted on the wall surface 103. Of course, a support member may also be directly mounted on the wall surface 103. The wall surface 103 of the mounting plate 102 is used for mounting, thereby preventing the wall surface 103 from being damaged due to long-term use by a user when the base 20 is mounted on the wall surface 103. That is to say, the base 20 may also be mounted on other wall surfaces 103 and is not limited to being mounted on the mounting plate 102.

The storage system 100 includes at least one base 20 and one storage container 10. The base 20 is configured to be mounted on the wall surface 103. The wall surface 103 here is not limited to one type of wall surface 103. Any surface on which the base 20 can be mounted may be referred to as the wall surface 103. The storage container 10 is detachably and fixedly mounted on the base 20. In the present application, the user may mount multiple bases 20 on the wall surface 103, and one or more storage containers 10 may be mounted on each base 20. The wall surface 103 may be, but is not limited to, the surface 103 of a wall, the surface of a wooden board, the surface of a metal plate, a sidewall surface 103 of a handcart 109, a sidewall surface 103 of a toolbox 1061, a wall surface 103 of a pickup truck, or a wall surface 103 of a riding mower. In addition to being a complete plane, the wall surface 103 here may be a wall surface 103 with intervals that is formed by at least two support rods or a network-like wall surface 103 formed by support rods. One base 20 is connected to at least two support rods so that the base 20 and the support rods remain relatively fixed.

The storage system 100 further includes one or more connecting rods 104 configured to connect two bases 20. As an example, the connecting rod 104 has a long rod-shaped structure. Mounting portions are disposed at two ends of the connecting rod 104. One mounting portion is connected to the upper surface of one base 20, and the other mounting portion is connected to the upper surface of the other base 20. Since the base 20 has a certain thickness, a gap is formed between the connecting rod 104 and the wall surface 103 for the item 101 to be hung on the connecting rod 104. Thus, the item 101 is coupled to the wall surface 103.

As another example of the connecting rod 104, the connecting rod 104 has an elongated structure. The mounting portions are disposed at the two ends of the connecting rod 104. One mounting portion is connected to the lower surface of the other base 20, and the other mounting portion is connected to the lower surface of the other base 20. In this example, one base 20 is connected to the other base 20 through the connecting rod 104 so that the two bases 20 form a longer new base 20. That is to say, the user may connect another base 20 to an end portion of the base 20 through the connecting rod 104 according to current requirements.

The storage system 100 further includes multiple first connecting members 16105 configured to fasten the base 20 to the wall surface 103. That is, multiple through holes are formed on the base 20, and the first connecting members 16105 are mounted and fixed to the wall surface 103 through the through holes. In this example, the base 20 may be made of a metal material. The first connecting members 16105 are specifically screws.

The storage container 10 or the multiple storage containers 10 are detachably and fixedly mounted to any position on the base 20. For convenience of description, the storage containers 10 are defined as a first-type storage container 11 and a second-type storage container 12 separately. Of course, a third-type storage container 10 may also be mounted on the base 20. The storage container 10 is detachably mounted at any position on the base 20. That is, the storage container 10 may be mounted at a first position on the base 20, or the storage container 10 may be removed from the first position and then mounted at a second position or a third position. Of course, alternatively, the storage container 10 may be removed from a first position on one base 20 and then mounted to a second position on another base 20. The multiple storage containers 10 are mounted at multiple positions on the base 20. The first-type storage container 11 may be mounted at the first position, and the second-type storage container 12 may be mounted at the second position. It is to be noted that the first position and the second position here are not two fixed positions. Each of the first position and the second position may be any position on one base 20, or the first position may be any position on one base 20, and the second position may be any position on another base 20. That is, the first position and the second position here only refer to different positions. Similarly, the first-type storage container 11, the second-type storage container 12, and the third-type storage container 10 here are not necessarily different types of storage containers 10 and may be the same type of storage containers 10.

Reference is also made to FIG. 4. The storage container 10 includes a body portion 13 and an engagement portion 14. The body portion 13 is connectable to the wall surface 103 or/and the base 20. The engagement portion 14 is connected to the body portion 13 and can be coupled to the item 101. The engagement portion 14 may be coupled to one or more items 101. Of course, engagement portions 14 on multiple storage containers 10 may be coupled to one item 101. A coupling manner of the item 101 may depend on an actual situation. The coupling here is not limited to a specific connection manner, that is, the coupling includes, but is not limited to, hanging, magnetic attraction, stacking, engagement, and insertion. Part of the engagement portion 14 is rotatable relative to the body portion 13, that is, the engagement portion 14 has a folded state and a use state relative to the body portion 13. When the engagement portion 14 is in the folded state, the engagement portion 14 retracts. In this case, the engagement portion 14 cannot be coupled to the item 101. When the engagement portion 14 is in the use state, the engagement portion 14 extends. In this case, the engagement portion 14 can be coupled to the item 101. As another example, the body portion 13 and the engagement portion 14 are detachably and fixedly connected to each other. As another example, the body portion 13 and the engagement portion 14 are integrally formed, that is, the engagement portion 14 and the body portion 13 can always remain fixedly connected to each other.

One or more storage containers 10 may be mounted on the base 20 according to an actual situation. Since the storage container 10 is detachable relative to the base 20, the user also needs to directly detach the storage container 10 from the base 20 to replace the storage container 10 with other types of storage containers 10 in some cases where the type of storage containers 10 needs to be changed to couple the item 101 to the storage container 10.

The storage system 100 further includes an adjustment portion 30. The adjustment portion 30 is configured to guide the storage container 10 to move between the first position and the second position. When the storage container 10 is driven by the user to move between the first position and the second position, the storage container 10 is configured to be connected to the base 20. That is, when the storage container 10 is mounted at the first position, the storage container 10 may be moved, through the adjustment portion 30, to the second position without completely detaching from the base 20. In actual use, the user generally fixedly connects multiple bases 20 to a wooden board and then mounts multiple storage containers 10 on the bases 20. In this manner, the user can couple tools to the base 20 so that it is convenient for the user to take the tools at any time when needed. However, the user may replace the tools coupled to the wooden board, and the sizes of different tools are generally inconsistent.

As a result, interference may occur between the tools. This requires the user to remove the storage container 10 from the base 20 and then move the storage container 10 to another position for use. Consequently, the user needs to detach the storage container 10 every time the storage container 10 needs to be moved, which is very inconvenient. The adjustment portion 30 is provided so that the user may move the storage container 10 without detaching the storage container 10 from the base 20.

The base 20 has a certain length direction. In the length direction of the base 20, when the storage container 10 is mounted to the first position, a distance L which the storage container 10 is guided by the adjustment portion 30 to move is greater than 0 mm and less than a length L1 of the base 20 along the length direction. That is to say, the storage container 10 can be guided by the adjustment portion 30 to slide on the base 20. In this manner, if some items 101 coupled to the storage container 10 may partially interfere with adjacent items 101, the user can avoid the interference between the items 101 without detaching the storage container 10 and then mounting the storage container 10 again, thereby facilitating convenient use by the user.

The distance L which the storage container 10 can be guided by the adjustment portion 30 to move is greater than 0 mm and less than a distance L2 of the storage container 10 along the length direction of the base 20. That is to say, the base 20 can be guided by the adjustment portion 30 to move a small distance in the case where the storage container 10 is not detached from the base 20. Thus, it is convenient for the user to adjust the spacing between storage containers 10.

In addition, when bases 20 are connected to each other side by side or may be connected to each other in sequence, the distance L that the storage container 10 can be guided by the adjustment portion 30 to move is not limited. That is, the storage container 10 may be guided by the adjustment portion 30 to slide from a previous base 20 to a subsequent base 20, and even further to another subsequent base 20.

As an implementable example of mating between the storage container 10 and the base 20 in the storage system 100, the storage system 100 further includes the adjustment portion 30 configured to enable the storage container 10 to move relative to the base 20. The storage container 10 has at least a first use state and a second use state relative to the base 20. When the storage container 10 is in the first use state, the storage container 10 is connected to the first position and is configured to be movable relative to the base 20. When the storage container 10 is in the second use state, the storage container 10 is connected to the first position and is configured to be fixed relative to the base 20. In actual use conditions, the multiple storage containers 10 are mounted on the base 20. When the user needs to couple another item 101 to the storage container 10, the position of the storage container 10 often needs to be adjusted due to an excessively small gap between storage containers 10. Normally, the user removes the storage container 10 from the base 20, moves the storage container 10 to an appropriate position, and then mounts the storage container 10 at the appropriate position on the base 20. However, when some items 101 are coupled to the storage container 10, only part of the storage containers 10 need to be moved so that the items 101 can be coupled to the base 20 and do not interfere with other items 101 coupled to the base 20. The adjustment portion 30 is provided so that when the user needs to move the storage container 10 by a small distance, the user does not need to detach the storage container 10 from the base 20 and only needs to switch the storage container 10 to the first use state and then adjust the position of the storage container 10 through the adjustment portion 30. After the storage container 10 is moved to the appropriate position, the storage container 10 is switched to the second use state. With this configuration, it is convenient for the user to adjust the positions of the storage containers 10 for some slight interference between the storage containers 10.

The storage system 100 includes a mounting assembly 40 configured to mount the storage container 10 to the base 20. One or a combination of a clamp, a screw, a snap, an insert pin, and a mortise and tenon may be adopted between the mounting assembly 40 and the base 20. The mounting assembly 40 may be mounted on the storage container 10 and cannot be separated from the storage container 10 during normal use. The mounting assembly 40 and the storage container 10 may be two structures that can be separated from each other and used independently.

The mounting assembly 40 is connected to the storage container 10. The mounting assembly 40 includes a locking portion 411 that is movable relative to the body portion 13, that is, the locking portion 411 can mate with the base 20 to separate the storage container 10 from or lock the storage container 10 to the base 20. When the storage container 10 is in the second use state, the locking portion 411 locks the storage container 10 to the base 20. In this case, the storage container 10 is fixedly mounted on the base 20. When the storage container 10 is in the first use state, the locking portion 411 is separated from the base 20, and the storage container 10 is connected to the base 20. In this case, the user may drive the storage container 10 to move on the base 20. That is, when the user wants to move the storage container 10, the user only needs to switch the storage container 10 from the second use state to the first use state, separate the locking portion 411 from the base 20, move the storage container 10 to a desired position, and then lock the locking portion 411 to the base 20, that is, the storage container 10 is switched from the first use state to the second use state.

The storage container 10 further includes a third use state. When the storage container 10 is in the third use state, the base 20, the locking portion 411, and the storage container 10 are completely separated, which may be understood as the removal of the storage container 10 from the base 20. The first use state is between the third use state and the second use state. Of course, during the movement of the storage container 10, the third use state may not occur.

The first use state, the second use state, and the third use state may be switched, that is, the first use state and the third use state may be directly switched, and the first use state and the second use state may be directly switched. With the preceding configuration, it is convenient for the user to quickly mount, move, or remove the storage container 10 from the base 20.

As an example for the base 20 and the storage container 10, the storage container 10 is a first feasible implementation structure, and the base 20 is a first feasible implementation structure. The adjustment portion 30 is disposed on the base 20, that is, the adjustment portion 30 and the base 20 are fixedly connected to each other or integrally formed. Along a left and right direction, when the storage container 10 is connected to the first position, the storage container 10 is guided by the adjustment portion 30 to move relative to the base 20. The distance which the storage container 10 moves is greater than 0 mm and less than the distance L2 of the storage container 10 in the left and right direction. The distance L2 of the storage container 10 in the left and right direction here refers to a distance between two opposite end portions of the body portion 13. With this configuration, it is convenient for the user to adjust the positions of the storage containers 10, and the interference between the items 101 is avoided when the user needs to couple the item 101 or replace the coupled item 101.

It is convenient for the user to adjust a distance between the items 101 according to an actual situation, which facilitates operation by the user and enhances user experience. The storage containers 10 here all refer to the same type of storage containers 10.

The locking portion 411 in the mounting assembly 40 can mate with the storage container 10 to cause the storage container 10 and the base 20 to remain fixed. The locking portion 411 is connected to the storage container 10 and is movable relative to the storage container 10. The locking portion 411 can mate with the base 20 to fix the storage container 10 to the base 20. In the process where the locking portion 411 mates with the base 20, the locking portion 411 has at least two states relative to the base 20, which are a locking state and a release state, respectively. The locking state and the release state may be switched to each other. When the locking portion 411 is in the locking state, the storage container 10 and the base 20 remain relatively fixed, and in this case, the storage container 10 is in the first use state. When the locking portion 411 is in the release state, the storage container 10 is movable on the base 20, and of course, the storage container 10 can also be directly removed from the base 20. It is to be understood that the first use state of the storage container 10 and the base 20 is regarded as an initial state. In this case, the locking portion 411 and the base 20 are in the locking state. When the user wants to move the storage container 10 on the base 20, the user only needs to switch the locking portion 411 to the release state and then move the storage container 10 on the base 20. In this case, the storage container 10 is in the second use state until the storage container 10 is moved to the position desired by the user. Then, a locking assembly is switched from the release state to the locking state so that the storage container 10 and the base 20 can remain relatively fixed. In this case, the storage container 10 is in the first use state. It is also to be understood that when the user wants to switch the storage container 10 from the first use state to the third use state, the user only needs to switch the locking portion 411 from the locking state to the release state and then remove the locking portion 411 from the base 20.

The storage container 10 further includes a coupling portion 15. The coupling portion 15 is configured to mate with the locking portion 411 to mount the storage container 10 on the base 20. The coupling portion 15 is configured to mate with the adjustment portion 30 to guide the movement of the storage container 10 on the base 20. The coupling portion 15 is connected to the body portion 13 of the base 20. The coupling portion 15 is disposed at a rear end of the body portion 13 and fixedly connected to the body portion 13. Along an up and down direction, the coupling portion 15 is disposed at an upper end of the locking portion 411. The coupling portion 15 is sleeved on an upper end of the adjustment portion 30. In the case where the storage container 10 is not separated from the base 20, the coupling portion 15 and the adjustment portion 30 always at least partially contact each other. The base 20 includes the adjustment portion 30, an abutting portion 21, and a contact portion 22. The adjustment portion 30 is connected to the contact portion 22, and the abutting portion 21 is connected to the contact portion 22. When the storage container 10 is connected to the base 20, the adjustment portion 30 is configured to at least partially contact the coupling portion 15, the contact portion 22 is configured to at least partially contact the body portion 13, and the abutting portion is configured to mate with the locking portion 411. When the locking portion 411 is in the release state, the storage container 10 can be guided by the adjustment portion 30 to slide on the base 20.

The mounting assembly 40 is connected to the body portion 13 and mates with the coupling portion 15 to fix the storage container 10 to the base 20. The mounting assembly 40 includes a locking member 41, an operation member 42, and an elastic member 43. The locking member 41 can be driven by the operation member 42 to move up and down relative to the body portion 13. The operation member 42 includes an operation portion 421 configured to be operated by the user. The locking member 41 includes the locking portion 411. The locking member 41 is at least partially disposed in the body portion 13. The elastic member 43 is disposed in the body portion 13 and sleeved on the locking member 41. One end of the elastic member 43 abuts against the body portion 13, and the other end of the elastic member 43 abuts against the elastic member 43. When the operation member 42 is forced to drive the locking member 41 to move downward, the elastic member 43 connected to the locking member 41 is caused to be compressed and deformed, and energy is stored in the elastic member 43. When the force on the operation member 42 is removed, an external force on the locking member 41 disappears, and the elastic member 43 releases the stored energy and drives the locking member 41 to move upward until the locking portion 411 abuts against the abutting portion 21. In this example, the locking member 41 and the operation member 42 are integrally formed. Along the up and down direction, the operation portion 421 is disposed at an upper end of the body portion 13. With this configuration, it can be convenient for the user to operate the locking portion 411 and mount the storage container 10 on the base 20 with one hand. Of course, as another example, the operation portion 421 may be disposed at a lower end of the body portion 13 and configured to be adjacent to the locking portion 411. This facilitates the operation by the user when the storage container 10 is mounted on the base 20. The operation portion 421 may be any position on the locking member 41 that can be driven by the user to drive the locking portion 411.

The storage container 10 further includes at least one stop portion 422. The stop portion 422 can mate with a limiting portion 133 formed on the body portion, thereby causing the locking portion 411 to move within a preset range limited by the limiting portion 133. The preset range may also be understood as a movement range in which the stop member 422 moves to the limiting portion 133 and abuts against the limiting portion 133.

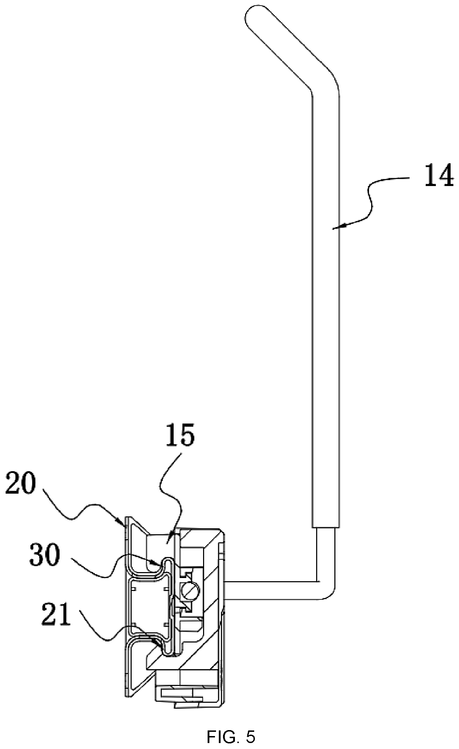

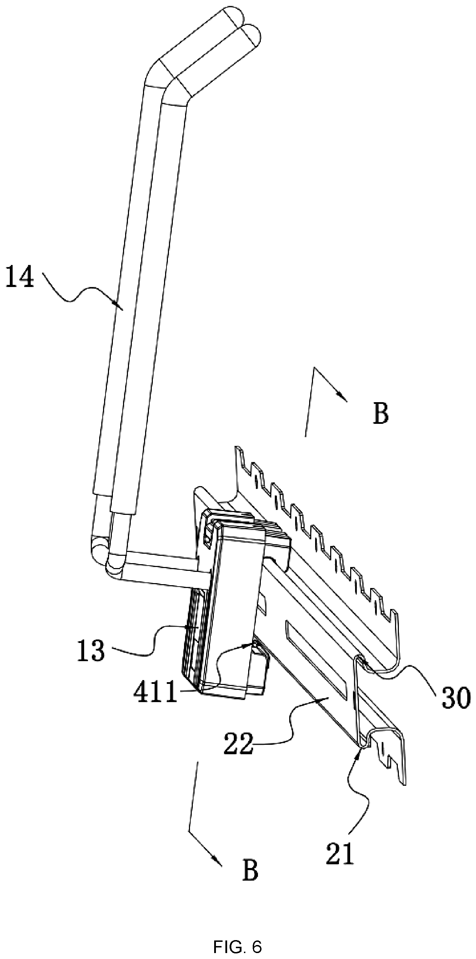

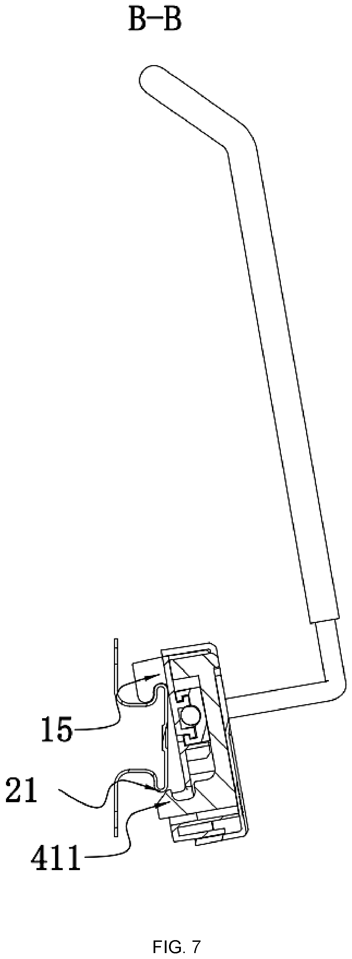

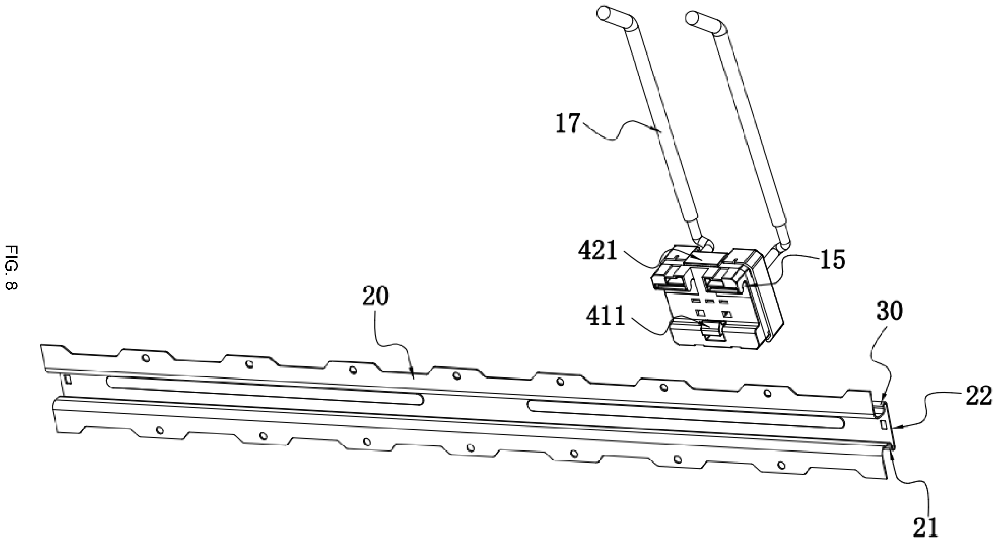

As shown in FIGS. 4 to 10, on a plane formed along a front and rear direction and the up and down direction, a projection of the adjustment portion 30 is generally U-shaped, and a projection of the abutting portion 21 is in an inverted U-shape. It is also to be understood that the projection of the abutting portion 21 is in a form of a U-shaped surface that opens downward. That is, the adjustment portion 30 is a groove recessed downward, and the abutting portion 21 is in a shape of an arc curved upward. On the plane formed along the front and rear direction and the up and down direction, the projection of the coupling portion 15 and a projection of the body portion 13 are generally in opposite U-shapes. The locking member 41 can mate with the abutting portion 21. On the plane formed along the front and rear direction and the up and down direction, a projection of the locking portion 411 is in a form of a U-shaped surface that opens downward, that is, the locking portion 411 is generally in a shape of an arc curved upward. When the locking member 41 is in the locking state, the U-shaped surface of the locking portion 411 is at least partially located within the U-shaped surface of the abutting portion 21.

When the user wants to mount the storage container 10 on the base 20, a method for mounting the storage container 10 on the base 20 is used. The user presses the operation portion 421 on the operation member 42 to move the locking portion 411 away from the body portion 13 until the stop portion 422 abuts against the limiting portion 133. Then, the coupling portion 15 is sleeved on the upper end of the adjustment portion 30 and is rotated toward the base 20 substantially about the adjustment portion 30 until the locking portion 411 rotates to a lower end of the abutting portion. In this case, the locking portion 411 is separated from the abutting portion 21. Then, the operation portion 421 is released so that the locking portion 411 moves toward the coupling portion 15 until the locking portion 411 abuts against the abutting portion, thereby fixedly connecting the storage container 10 to the base 20. In this case, the user completes the mounting of the storage container 10 on the base 20. The user may mount the item 101 on the engagement portion 14.

When the user wants to move the storage container 10 to another position on the base 20, an operation method for moving the storage container 10 on the base 20 is used. The user presses the operation portion 421 to move the locking portion 411 away from the body portion 13, separates the locking portion 411 from the abutting portion 21, and then moves the storage container 10. In this case, the coupling portion 15 is guided by the adjustment portion 30 to move to a position desired by the user and stop. Then, the operation portion 421 is released, and the locking portion 411 moves upward until the locking portion 411 abuts against the abutting portion, thereby fixedly connecting the storage container 10 to the base 20. In this case, the user completes the movement of the storage container 10.

With continued reference to FIGS. 4 to 10 and FIG. 69, as an example of the storage container 10, the storage container 10 further includes a connecting member 16 and an engagement member 17. The engagement member 17 is used in conjunction with the connecting member 16. The body portion 13 includes a front housing 131 and a rear housing 132. The front housing 131 and the rear housing 132 form an accommodation space. The connecting member 16, the operation member 42, the elastic member 43, and the engagement member 17 are each at least partially disposed in the accommodation space. Two stop portions 422 are connected to or integrally formed on the operation member 42, which are a first stop portion 4221 and a second stop portion 4222, respectively. The first stop portion 4221 and the second stop portion 4222 can mate with a first limiting portion 1331 or a second limiting portion 1332 formed on the body portion 13 to maintain the operation member 42 at a current position. Specifically, the front housing 131 is formed with a guide groove for the movement of the operation portion 421, and the limiting portion 133 is formed at an end portion of the guide groove for limiting. That is, an end portion of the operation portion 421 is the second stop portion 4222, and the end portion of the guide groove is the second limiting portion 1332. The user may drive the operation member 42 to move in the guide groove until the second stop portion 4222 abuts against the second limiting portion 1332 and thus stops moving. In the current state, the locking portion 411 is separable from the abutting portion 21, or a sufficient space exists between the locking portion 411 and the coupling portion 15 to facilitate the entry of the base 20 into the space. The connecting member 16 is connected to or integrally formed with the engagement portion 14. The connecting member 16 is generally U-shaped. Two end portions of the connecting member 16 are connected to the engagement portion 14. An intermediate section 107 of the connecting member 16 is connected to the rear housing 132 through the engagement member 17, and the connecting member 16 is rotatable relative to the rear housing 132. During the rotation, the connecting member 16 drives the engagement portion 14 to rotate. When the engagement portion 14 is folded upward, the engagement portion 14 switches to a folded state, and when the engagement portion 14 rotates downward, the engagement portion 14 switches to a use state. The elastic member 43 is disposed in the accommodation space. Specifically, one end of the elastic member 43 abuts against the operation member 42, and the other end of the elastic member 43 abuts against the rear housing 132. With this configuration, when the user presses the operation member 42 downward, the locking portion 411 moves downward together, and the elastic member 43 is forced to deform and store the energy. When the user removes a force applied to the operation member 42, the elastic member 43 rebounds and drives the operation member 42 to return to an original position until the first stop portion 4221 provided on the operation member 42 abuts against the first limiting portion 1331 provided on the rear housing 132. In this case, the operation member 42 stops moving.

The storage container is a second feasible implementation structure, and the base is the first feasible implementation structure. As shown in FIG. 11, a principle of the storage container in this example is substantially the same as that of the storage container in the preceding example, and only some structural differences exist therebetween. The storage container further includes a connecting member 214. A body portion 211 includes a front housing 212 and a rear housing 213. The front housing 212 and the rear housing 213 are combined to form an accommodation space. The connecting member 214, an operation member 215, and an elastic member 216 are at least partially disposed in the accommodation space. The front housing 212 is formed with a groove 218 for a movement of an operation portion and a limiting portion 217 that mates with a stop portion. The connecting member 214 is connected to or integrally formed with engagement portions 219. An intermediate section of the connecting member 214 is fixedly connected to the rear housing 213. Two ends of the connecting member 214 are connected to the engagement portions 219. The connecting member 214 is generally in an inverted U-shape along the up and down direction. The groove 218 is formed at two ends of the rear housing 213. The connecting member 214 is engaged in the groove 218. Lower ends of the connecting member 214 partially extend out of the accommodation space and are connected to the engagement portions 219. This configuration ensures that the connecting member 214 is fixedly connected to the body portion 211. The connecting member 214 is pivotally connected to the body portion 211. That is, the engagement portions 219 may be folded upward through the connecting member 214 to be switched to a folded state. Alternatively, the engagement portions 219 may be folded downward through the connecting member 214 to be switched to a use state. The elastic member 216 is disposed in the accommodation space. One end of the elastic member 216 abuts against the operation portion, and the other end of the elastic member 216 abuts against the body portion 211. With this configuration, when the user presses the operation portion downward, the elastic member 216 is forced to deform and store energy. When the user removes a force applied to the operation portion, the elastic member 216 rebounds and returns the operation portion to an original position.

The storage container is a third feasible implementation structure, and the base is the first feasible implementation structure. The difference between this structure and the structure of the storage container in the first example is that an operation portion is not disposed at an upper end of a body portion in this example. The user may directly apply a force to a locking portion to increase a spacing between the locking portion and a coupling portion. Then, the locking portion is released after the coupling portion is sleeved on the adjustment portion, thereby coupling the storage container to the base.

The storage container is a fourth feasible implementation structure, and the base is a second feasible implementation structure. To further enhance the stability of the connection between the storage container and the base, a contact portion of the base may be provided with several mounting positions arranged at intervals. A mounting assembly further includes fasteners, and the fasteners further fix the storage container to the base. The fasteners may be pins or screws. A hole may be provided in a body portion of the storage container for a screw to extend through.

A storage container 50 is a fifth feasible implementation structure, and a base 51 is a third feasible implementation structure. As shown in FIGS. 12 to 15, a mounting assembly 52 is connected to a body portion 501. The mounting assembly 52 includes a locking member 521, a pivoting member 522, and a fixing member 523. The pivoting member 522 extends through the locking member 521 to be inserted into the body portion 501. The fixing member 523 is disposed in the body portion 501 and configured to be connected and fixed to the pivoting member 522 so that the locking member 521 is connected to the body portion 501. The locking member 521 is rotatable about the pivoting member 522. During the rotation of the locking member 521, the locking member 521 switches between a locking state in which a locking portion 524 can mate with an abutting portion 511 of the base 51 and a release state in which the locking portion 524 is separated from the abutting portion 511.

On the plane formed along the front and rear direction and the up and down direction, a projection of an adjustment portion 512 is generally L-shaped, and a projection of the abutting portion 511 is in a form of a U-shaped surface that opens downward. That is, the adjustment portion 512 is a groove recessed downward, and the abutting portion 511 is in a shape of an arc curved upward. On the plane formed along the front and rear direction and the up and down direction, the projection of the coupling portion 502 and a projection of the body portion 501 are generally in opposite U-shapes. The locking member 521 can mate with the abutting portion 511. On the plane formed along the front and rear direction and the up and down direction, a projection of the locking portion 524 is in a form of a U-shaped surface that opens downward, that is, the locking portion 524 is generally in a shape of an arc curved upward. When the locking member 521 is in the locking state, the U-shaped surface of the locking portion 524 is at least partially located within the U-shaped surface of the abutting portion 511.

Specifically, when the user wants to mount the storage container 50 on the base 51, the user causes the locking member 521 to be in the release state, then inserts the coupling portion 502 into the adjustment portion 512, and then rotates the locking member 521 along a first direction 503 until the locking portion 524 contacts the abutting portion, causing the locking member 521 to switch from the release state to the locking state. In this case, the storage container 50 is fixedly connected to the base 51. It is to be understood that the storage container 50 switches from the third use state to the first use state. When the user wants to move the storage container 50, the user only needs to rotate the locking member 521 along an opposite direction of the first direction 503 until the locking portion 524 is separated from the abutting portion, causing the locking member 521 to switch to the release state. Then, the coupling portion 502 is removed from the adjustment portion 512 so that the storage container 50 can be removed from the base 51. Furthermore, the storage container 50 is fixed to the base 51. When the user wants to move the storage container 50, that is, the storage container 50 switches from the first use state to the second use state and then switches to the first use state, the user drives the locking member 521 to rotate along the opposite direction of the first direction 503 to separate the locking portion 524 from the abutting portion and further switch the locking member 521 to the release state. In this case, the coupling portion 502 is still connected to the adjustment portion 512, and the user may drive the storage container 50 to be guided by the adjustment portion 512 to move relative to the base 51. Until the storage container 50 reaches a position desired by the user, the user stops moving the storage container 50. In this case, the user drives the locking member 521 to rotate along the first direction 503, bringing the locking portion 524 into contact with the abutting portion 511, thereby causing the storage container 50 and the base 51 to remain relatively fixed. In this case, the movement of the storage container 50 on the base 51 is completed on the premise that the storage container 50 is not separated from the base 51, or even a slight movement of the storage container 50 is completed.

A storage container 60 is a sixth feasible implementation structure, and a base 61 is the third feasible implementation structure. As shown in FIGS. 16 to 18, structures of the storage container 60 and the base 61 are substantially the same as the structures of the preceding example, and a difference lies in a structure of a mounting assembly 62. Only the structure of the mounting assembly 62 and a manner in which the mounting assembly 62 is locked to the base 61 are introduced here.

The mounting assembly 62 includes a locking member 621 made of an elastic material. The locking member 621 is specifically an elastic tab. The elastic tab is configured to be inclined with respect to a body portion 601. A lower end of the elastic tab is inclined toward a coupling portion 602. One end of the elastic tab is connected to the body portion 601, and the other end of the elastic tab is configured to be allowed to mate with an abutting portion 611, thereby allowing the storage container 60 to be separated from or locked to the base 61. The elastic tab includes a locking portion 622.

Specifically, when the user wants to mount the storage container 60 on the base 61, the user switches the storage container 60 from the third use state to the first use state. The user inserts the coupling portion 602 into an adjustment portion 612 and then presses the elastic tab so that the locking portion 622 at the lower end of the elastic tab is engaged with the abutting portion 611, thereby causing the storage container 60 and the base 61 to remain relatively fixed. When the user wants to remove the storage container 60 from the base 61, the user removes the locking portion 622 from the abutting portion 611 and then removes the coupling portion 602 from the adjustment portion 612 so that the storage container 60 can be detached from the base 61. When the user wants to move the storage container 60, the user may separate the locking portion 622 from the abutting portion 611 and then drive the storage container 60 to be guided by the adjustment portion 612 to move. Of course, the user may directly move the storage container 60 without separating the locking portion 622 from the abutting portion 611 such that the storage container 60 can also be moved relative to the base 61.

In this example, an operation portion is disposed at the lower end of the body portion, that is, the lower end of the elastic tab.

A storage container 53 is a seventh feasible implementation structure, and a base 54 is the third feasible implementation structure. As shown in FIGS. 19 to 22, structures of the storage container 53 and the base 54 are substantially the same as the structures of the preceding example, and a difference lies in a structure of a mounting assembly 55. Only the structure of the mounting assembly 55 and a manner in which the mounting assembly 55 is locked to the base 54 are introduced here.

A mounting member includes a locking member 551, a pivoting member 552, and a reset member 553. The locking member 551 is connected to a body portion 531 through the pivoting member 552 so that the locking member 551 is rotatable back and forth about the left and right direction. One end of the reset member 553 abuts against the locking member 551, and the other end of the reset member 553 abuts against the body portion 531. In an early stage of mounting, the reset member 553 applies a force to the locking member 551 to cause the locking member 551 to rotate in a third direction 533.

Specifically, when the user wants to mount the storage container 53 on the base 54, the user inserts a coupling portion 532 into the adjustment portion and then drives the locking member 551 to rotate about the left and right direction in a second direction until a locking portion is lower than an abutting portion 541. Then, the force applied to the locking member 551 is removed so that the locking member 551 rotates in the third direction 533 under the action of the reset member 553 until the locking portion abuts against the abutting portion 541. When the user wants to remove the storage container 53 from the base 54, the user only needs to drive the locking member 551 to rotate in the second direction, separate the locking portion from the abutting portion 541, and then separate the coupling portion 532 from the adjustment portion so that the storage container 53 can be switched from the first use state to the third use state. When the user wants to move the storage container 53 on the base 54, the user only needs to drive the locking member 551 to rotate in the second direction, separate the locking portion from the abutting portion 541, drive the storage container 53 to be guided by the adjustment portion to move to a desired position, and then release the locking member 551 to cause the locking portion to abut against the abutting portion 541. The third direction 533 is opposite to the second direction.

In this example, an operation portion is disposed at a lower end of the body portion and an upper end of the locking member 551.

A storage container 56 is an eighth feasible implementation structure, and a base 58 is a fourth feasible implementation structure. As shown in FIG. 23, principles of the storage container 56, a mounting assembly 57, and the base 58 are substantially the same as principles of the storage container 56, the base 58, and the mounting assembly 57 mentioned above. Specific manners in which the storage container 56 is connected to and detached from the base 58 are also substantially the same, and structures of the storage container 56 and the base 58 are generally similar. Only specific structures of a locking portion 572 on a locking member 571 and an abutting portion 581 of the base 58 are different. On the plane formed along the up and down direction of the base 58 and the front and rear direction of the base 58, a projection of the adjustment portion is L-shaped, a projection of the abutting portion 581 is planar, and a projection of the locking portion 572 is planar. That is, the adjustment portion is a groove recessed downward, and the abutting portion 581 is a plane.

A storage container 63 is a ninth feasible implementation structure, and a base 65 is a fifth feasible implementation structure. As shown in FIG. 30, principles of the storage container 63, a mounting assembly 64, and the base 65 are substantially the same as principles of the storage container 63, the base 65, and the mounting assembly 64 mentioned above. Specific manners in which the storage container 63 is connected to and detached from the base 65 are also substantially the same, and structures of the storage container 63 and the base 65 are generally similar. Only specific structures of a locking portion 642 on a locking member 641 and an abutting portion 651 of the base 65 are different. On the plane formed along the up and down direction of the base 65 and the front and rear direction of the base 65, a projection of the adjustment portion is L-shaped, a projection of the abutting portion 651 is in a form of a U-shaped surface that opens downward, and a projection of the locking portion 642 is in an opposite J-shape. That is, the adjustment portion is a groove recessed downward, and the abutting portion 651 is in a shape of an arc curved upward.

A storage container 66 is a tenth feasible implementation structure, and a base 68 is a sixth feasible implementation structure. As shown in FIGS. 24 to 26, principles of the storage container 66, a mounting assembly 67, and the base 68 are substantially the same as principles of the storage container 66, the base 68, and the mounting assembly 67 mentioned above. Specific manners in which the storage container 66 is connected to and detached from the base 68 are also substantially the same, and structures of the storage container 66 and the base 68 are generally similar. Only specific structures of a locking portion 672 on a locking member 671 and an abutting portion 681 of the base 68 are different. That is, on the plane formed along the front and rear direction and the up and down direction, a projection of the locking member 671 is generally in an opposite J-shape, a projection of the abutting portion 681 that mates with the locking member 671 is generally in an opposite L-shape, and the abutting portion 681 is a groove that protrudes upward. With this configuration, when the locking member 671 contacts the abutting portion 681, the locking member 671 is just engaged with the groove, thereby better locking the storage container 66 to the base 68. Thus, the connection between the storage container 66 and the base 68 is more stable.

A storage container 691 is an eleventh feasible implementation structure, and a base 693 is a seventh feasible implementation structure. As shown in FIGS. 27 to 29, principles of the storage container 691, a mounting assembly 692, and the base 693 are substantially the same as principles of the storage container 691, the base 693, and the mounting assembly 692 mentioned above. Specific manners in which the storage container 691 is connected to and detached from the base 693 are also substantially the same, and structures of the storage container 691 and the base 693 are generally similar. Only specific structures of a locking portion 695 on a locking member 694 and an abutting portion 696 of the base 693 are different. That is, on the plane formed along the up and down direction of the base 693 and the front and rear direction of the base 693, a projection of the adjustment portion is L-shaped, a projection of the abutting portion 696 is planar, and a projection of the locking portion 695 is in an opposite J-shape. In addition, a distance of the projection of the abutting portion 696 along the front and rear direction is greater than a distance of the projection of the adjustment portion along the front and rear direction. The storage container 691 in the third example may be provided with a hole. Further, a screw may be used. The screw may extend through the hole in the storage container 691 to be connected to the base 693, thereby further fixing the storage container 691 to the base 693.

A storage container 70 is a twelfth feasible implementation structure, and a base 71 is an eighth feasible implementation structure. As shown in FIGS. 31 to 33, similarly, the storage container 70 includes an adjustment portion 701. The storage container 70 is detachably connected to a first position on the base 71 and a second position on the base 71. The storage container 70 moves between the first position and the second position through the adjustment portion 701. The storage container 70 is connected to the base 71 in a process where the storage container 70 moves from the first position to the second position.

Multiple mounting portions 711 are provided on the base 71. The storage container 70 is mounted at the first position. The storage container 70 may be guided by the adjustment portion 701 to move to the second position. That is, a body portion 702 of the storage container 70 is mounted on any one of the mounting portions 711. The storage container 70 may be guided by the adjustment portion 701 to move to other positions. For convenience of description, a first mounting portion 711 and a second mounting portion 711 are defined here. The first mounting portion 711 and the second mounting portion 711 are spaced apart from each other and are adjacent to each other along the left and right direction. Of course, the base 71 is not provided with only two mounting portions 711 and may be provided with multiple mounting portions 711. The specific number of mounting portions 711 may be selected according to the user's requirements. The first mounting portion 711 and the second mounting portion 711 are not the same mounting portion 711. The first mounting portion 711 here does not specifically refer to a particular mounting portion 711 as long as the first mounting portion 711 is any mounting portion 711 that can mount the storage container 70. The second mounting portion 711 here does not specifically refer to a particular mounting portion 711 as long as the second mounting portion 711 is spaced apart from and adjacent to the first mounting portion 711. Similarly, when the storage container 70 is mounted at the first position, it is not specifically limited that the storage container 70 is mounted on a particular mounting portion 711.

Along the left and right direction, a position where the storage container 70 is mounted on the base 71 is defined as the first position, a distance which the storage container 70 can move rightward or leftward is L, and a distance from the first mounting portion 711 to the second mounting portion 711 along the left and right direction is D. A length of the base 71 along the left and right direction is L1. When the storage container 70 is connected to the first position, the distance L which the storage container 70 is guided by the adjustment portion 701 to move along the left and right direction is greater than or equal to one third of the distance D from the first mounting portion 711 to the second mounting portion 711 and less than the length L1 of the base 71 along the left and right direction. With this configuration, it is convenient for the user to adjust the positions of the storage containers 70, thereby improving the user experience. Further, the distance L which the storage container 70 is guided by the adjustment portion 701 to move along the left and right direction is greater than or equal to one third of the distance D from the first mounting portion 711 to the second mounting portion 711 and less than the distance D from the first mounting portion 711 to the second mounting portion 711. With this configuration, it is convenient for the user to adjust the position of the storage container 70.

The adjustment portion 701 is not limited to guiding the storage container 70 to move along the left and right direction. The adjustment portion 701 may be configured, according to an actual situation, to guide the storage container 70 to move along other directions.

The multiple mounting portions 711 are provided on the base 71, and a mounting component 72 extends through the body portion 702 to mount the storage container 70 to a required corresponding mounting portion 711. The adjustment portion 701 is provided on the body portion 702 of the storage container 70, that is, the mounting component 72 extends through the adjustment portion 701 to mount the storage container 70 on the base 71. When the storage container 70 is in the first use state, the mounting component 72 extends through the adjustment portion 701 and is connected to the mounting portion 711. In this case, a distance from an upper surface of the base 71 to a top of the mounting component 72 enables the storage container 70 to move relative to the base 71. When the storage container 70 is in the second use state, the mounting component 72 extends through the adjustment portion 701 and is locked to the mounting portion 711. In this case, the storage container 70 abuts against the base 71 and the mounting portion 711, and the mounting component 72, the storage container 70, and the base 71 remain relatively fixed to each other.

When the user wants to move the storage container 70, the user only needs to switch the storage container 70 from the second use state to the first use state and release the mounting component 72 from the mounting portion 711 to increase the distance from the top of the mounting component 72 to the upper surface of the base 71, thereby enabling the storage container 70 to move relative to the base 71. In this case, the storage container 70 is switched from the second use state to the first use state. The user may move the storage container 70 to an appropriate position according to a working condition and then lock the mounting component 72 to the mounting portion 711 until the mounting component 72, the storage container 70, and the base 71 remain relatively fixed to each other. In this case, the storage container 70 is switched from the first use state to the second use state. In the preceding switching process, a movement of the storage container 70 is completed in the case where the storage container 70 remains non-separated from the base 71.

The storage container 70 further includes the third use state. When the storage container 70 is in the third use state, the mounting component 72 and the storage container 70 are completely separated from the base 71, which may also be understood as removal of the storage container 70 from the first mounting portion 711. The first use state is between the third use state and the second use state. Of course, during the movement of the storage container 70, the third use state may not occur. When a distance by which the user moves the storage container 70 is greater than the distance from the first mounting portion 711 to the second mounting portion 711, or the user needs to replace the storage container 70 with a different type of storage container 70, the user only needs to switch the storage container 70 from the second use state to the third use state, that is, the user only needs to release the mounting component 72 from the mounting portion 711 until the mounting component 72 is completely separated from the mounting portion 711. In this case, the storage container 70 is separated from the base 71, and the storage container 70 can also be separated from the mounting component 72. When the user needs to replace the storage container 70 with a different type of storage container 70, the user only needs to take out a required storage container 70, insert the mounting component 72 through the new storage container 70, and then fix them in the mounting portion 711. The mounting portion 711 here may be a new mounting portion 711, or the new storage container 70 may still be mounted on the previous mounting portion 711. Similarly, when the user needs to change a mounting position of the storage container 70, the user only needs to repeat the preceding removal operation and then mount the mounting component 72 to another mounting portion 711 to which the mounting component 72 needs to be mounted.

The mounting portion 711 may be a hole, that is, a mounting hole. The adjustment portion 701 may be an elongated slotted hole provided on the body portion 702. The mounting component 72 is specifically a screw 721. The mounting hole is specifically a hole for the screw 721. The screw 721 may extend through and then be screwed into the hole for the screw 721. When the screw 721 is partially screwed into the hole for the screw 721, and the storage container 70 is movable relative to the base 71, the user may move, as needed, the storage container that is guided by the slotted hole. When the user moves the storage container 70 to a desired position, the screw 721 is further screwed into the mounting portion 711 until the screw 721 is tightened. That is, the storage container 70, the mounting component 72, and the base 71 remain relatively fixed. When the user needs to change the position of the storage container 70, the user only needs to unscrew part of the mounting component 72 so that the storage container 70 is moved under action of the adjustment portion 701, and then the mounting component 72 is tightened again. Alternatively, the mounting component 72 is completely unscrewed so that the mounting position of the storage container 70 is changed. In actual use, the preceding configuration provides a simple structure, is easy to implement, and is low in cost. Moreover, the preceding configuration provides simple operation and convenient use for the user.

A storage container 73 is a thirteenth feasible implementation structure, and a base 74 is a ninth feasible implementation structure. As shown in FIGS. 34 to 38, the storage system further includes an adjustment portion 731 configured to enable the storage container 73 to move relative to the base 74. The storage container 73 has at least the first use state and the second use state relative to the base 74. When the storage container 73 is in the first use state, the storage container 73 is connected to a first mounting portion 741 and configured to be movable relative to the base 74. When the storage container 73 is in the second use state, the storage container 73 is connected to the first position and configured to be fixed relative to the base 74. The adjustment portion 731 and the base 74 mate with the storage container 73 so that it is convenient for the user to adjust positions of storage containers 73 for some slight interference between the storage containers 73.

Along the left and right direction, when the storage container 73 is connected to the first position, or equivalently, when the storage container 73 is connected to the first mounting portion 741, the storage container 73 can be guided by the adjustment portion 731 to move relative to the base 74. A distance which the storage container 73 moves is L1. A distance from the first mounting portion 741 to a second mounting portion 742 along the left and right direction is D. A distance L which the storage container 73 is guided by the adjustment portion 731 to move is greater than or equal to one half of the distance D from the first mounting portion 741 to the second mounting portion 742 and less than a length L of the base 74 along the left and right direction. With this configuration, it is convenient for the user to adjust the positions of the storage containers 73, thereby improving the user experience. It is to be noted that the distance which the storage container 73 is guided by the adjustment portion 731 to move refers to a distance which the same end portion of the storage container 73 moves during the movement of the storage container 73. For convenience of measurement, the distance from the first mounting portion 741 to the second mounting portion 742 refers to a distance from a leftmost end of the first mounting portion 741 and a leftmost end of the second mounting portion 742. The storage containers 73 here all refer to the same type of storage containers 73.

A mounting assembly 75 is used for connecting the storage container 73 to the base 74. Multiple mounting portions are provided on the base 74, and the mounting assembly 75 extends through a body portion to mount the storage container 73 to a required corresponding mounting portion. The adjustment portion 731 is provided on the base 74, that is, the mounting assembly 75 extends through the storage container 73 and then extends through the adjustment portion 731, thereby connecting the mounting assembly 75 and the storage container 73 to the base 74. When the storage container 73 is in the first use state, the storage container 73 is movable relative to the base 74. When the storage container 73 is in the second use state, the mounting assembly 75 is locked to the mounting portion. In this case, the mounting assembly 75, the storage container 73, and the base 74 remain relatively fixed to each other.

When the user wants to move the storage container 73, the user only needs to switch the storage container 73 from the second use state to the first use state and release the mounting assembly 75 from the mounting portion so that the storage container 73 is movable relative to the base 74. In this case, the storage container 73 is in the second use state. Further, in the case where the storage container 73 is still connected to the first mounting portion 741, the storage container 73 is moved. After the user may move the storage container 73 to an appropriate position according to an actual working condition, the mounting assembly 75 is locked to the first mounting portion 741 so that the storage container 73, the mounting assembly 75, and the base 74 remain relatively fixed. In this case, the storage container 73 completes the switchover from the second use state to the first use state.

The storage container 73 further includes the third use state. When the storage container 73 is in the third use state, the mounting assembly 75 and the storage container 73 are completely separated from the first mounting portion 741, which may also be understood as removal of the storage container 73 from the first mounting portion 741. The first use state is between the third use state and the second use state. Of course, during the movement of the storage container 73, the third use state may not occur. That is, the storage container 73 is moved only at the first mounting portion 741. When the user wants to move the storage container 73 from the first mounting portion 741 to the second mounting portion 742 or another mounting portion, the user only needs to switch the storage container 73 from the second use state to the third use state, that is, the user only needs to release the storage container 73 from the first mounting portion 741 until the mounting assembly 75 and the storage container 73 are completely separated from the base 74. Then, the storage container 73 is mounted to the mounting portion through the mounting assembly 75. Similarly, if the user wants to replace the storage container 73, the user only needs to switch the storage container 73 to the third use state and then replace the storage container 73 with a different type of storage container 73. With the preceding configuration, it is convenient for the user to mount the storage container 73 to or remove the storage container 73 from the base 74, and it is also convenient for the user to move the storage container 73 in a small range.

The adjustment portion 731 and the mounting portion are the same structure, that is, the adjustment portion 731 is provided on the base 74. The adjustment portion 731 is specifically an elongated groove or an elongated through hole provided on the base 74. Since the mounting portion and the adjustment portion 731 are the same structure, multiple elongated grooves or multiple elongated through holes are provided on the base 74 at intervals.

The mounting assembly 75 can mate with the first mounting portion 741 so that the mounting assembly 75 is released from or locked to the first mounting portion 741. The mounting assembly 75 is specifically a quick-release pin 754. The quick-release pin 754 has a driving portion 751, an intermediate member 752, and a positioning portion 753. The positioning portion 753 can be driven by the driving portion 751 to have an avoidance state and an abutting state relative to the intermediate member 752. When the positioning portion 753 is in the avoidance state, the positioning portion 753 retracts into the intermediate member 752. When the positioning portion 753 is in the abutting state, the positioning portion 753 protrudes from the intermediate member 752. When the quick-release pin 754 is not affected by an external force, the positioning portion 753 is in the abutting state. When the user wants to connect the storage container 73 to the base 74, the user presses the driving portion 751 to cause the positioning portion 753 to be in the avoidance state, then inserts the intermediate member 752 through the storage container 73 to cause the intermediate member 752 to contact the first mounting portion 741, and releases the driving portion 751 to cause the positioning portion 753 to abut against the first mounting portion 741, thereby fixing the storage container 73 to the base 74.

As shown in FIGS. 39 to 48, the base 20 and the storage container 10 mentioned above may also be mounted on other tools.

As shown in FIGS. 39 to 42, the base 20 and the storage container 10 in the storage system 100 described in the present application may each mate with a toolbox system 106, thereby coupling the item 101 to the toolbox system 106. The toolbox system 106 includes at least one toolbox 1061, a traveling assembly, an intermediate member, and any one of the storage containers 10 and the bases 20 mentioned above. The toolbox here includes any one of the storage containers 10 and the base 20 mentioned above, which may be understood as follows: the base 20 is mounted to the toolbox 1061, and then the storage container 10 is mounted on the base 20, or which may be understood as the base 20 is directly formed on the toolbox 1061, that is, the toolbox 1061 and the base 20 are integrally formed, and then the storage container 10 is mounted on the base 20.

The toolbox system 106 includes multiple toolboxes 1061, and toolboxes 1061 are stacked through a connecting device. The toolbox 1061 includes four sidewalls and an upper top wall and a lower bottom wall that are connected to the sidewalls. The four sidewalls are connected to each other through intermediate sections 107. The toolbox system 106 may also be connected to a workbench as required. The workbench may also be connected to a top of an uppermost toolbox 1061 through the connecting device. A structure of the connecting device here is not limited as long as the connecting device can connect the toolboxes 1061 or connect the toolbox 1061 to the workbench.

The intermediate member is mounted on the intermediate section 107, that is, one or more intermediate sections 107 can be mounted on four intermediate sections 107 of the toolbox 1061. One end of the base 20 is connected to an intermediate member on one intermediate section 107, and the other end of the base 20 is connected to an intermediate member on another intermediate section 107. The two intermediate members form a support of the base 20, which may be understood as the preceding wall surface 103 formed by the support rods. Similarly, intermediate sections 107 are also formed at corners of the workbench so that the user may mount the bases 20 around the workbench, thereby coupling the storage containers 10 to the bases 20. In this manner, the user connects tools required for work to the storage containers 10 at a workplace. When working at the workplace, the user may need to change accessories, power supplies, tools, or the like due to different working conditions. The required tools are connected to an outer wall of the toolbox 1061 through the storage containers 10 so that the user does not need to open the toolbox 1061 and then rummage inside the toolbox 1061 to take a required item 101. The user may directly remove the tools connected to the outer wall of the toolbox 1061. This configuration may be understood as follows: the toolbox system 106 is formed with a storage rack.

In addition, the toolbox system 106 has traveling devices. The traveling devices are specifically wheels connected to the toolbox 1061. That is, the user may push, through the wheels, the toolbox 1061 to travel. In this manner, the toolbox system 106 becomes a movable storage rack so that it is convenient for the user to push the toolbox system 106 to move when changing a work site. In addition, in some special working conditions, the user needs to use some pole tools to complete work. The pole tools cannot be placed in the toolbox 1061. Therefore, the user may mount the bases 20 on sidewalls of two adjacent toolboxes 1061 and then mount the storage containers 10 on the bases 20. An engagement portion 14 of a lower storage container 10 may be slot-shaped, and an engagement portion 14 of an upper storage container 10 is a clamping slot that can be opened or closed. In this manner, the user places a bottom of a pole tool in the slot-shaped storage container 10 and places an upper end of the pole tool in the storage container 10 which is the clamping slot, so as to limit a movement position of the pole tool. In this manner, the user may connect the pole tool to the sidewalls of the toolboxes 1061 during transportation, thereby facilitating the transportation. When the user works, the user may place the pole tool on the sidewalls of the toolboxes 1061 to form a movable storage rack, so as to avoid the case where various tools are directly placed on the ground and it is time-consuming for the user to find a required pole tool. As other examples, two storage containers 10 may be vertically mounted on the same toolbox 1061 or may be vertically mounted on toolboxes 1061 connected at intervals. A specific toolbox 1061 on which the two storage containers 10 are disposed may be selected according to user requirements, a tool length, and personal preference.

As shown in FIGS. 43 and 44, the base 20 and the storage container 10 in the storage system 100 described in the present application may each mate with a platform cart system 108, thereby coupling the item 101 to the toolbox system 106. The platform cart system 108 includes a platform cart, toolboxes 1061 stacked on the platform cart, an intermediate member, and any of the storage containers 10 and the bases 20 mentioned above. The platform cart includes the multiple toolboxes 1061. The user may mount the multiple toolboxes 1061 on the platform cart as required. The platform cart and the toolboxes 1061 are stacked through connecting devices, and the toolboxes 1061 are also stacked through connecting devices. The toolbox system 106 may also be connected to the workbench as required. The workbench may also be connected to the top of the uppermost toolbox 1061 through the connecting device. The structure of the connecting device here is not limited as long as the connecting device can connect the toolboxes 1061 or connect the toolbox 1061 to the workbench. The intermediate member is mounted on the intermediate section 107, that is, the one or more intermediate sections 107 can be mounted on the four intermediate sections 107 of the toolbox 1061. One end of the base 20 is connected to an intermediate member on one intermediate section 107, and the other end of the base 20 is connected to an intermediate member on another intermediate section 107. The two intermediate members form a support of the base 20, which may be understood as the preceding wall surface 103 formed by the support rods. Similarly, the intermediate sections 107 are also formed at the corners of the workbench so that the user may mount the bases 20 around the workbench, thereby coupling the storage containers 10 to the bases 20.

A bottom plate of the platform cart is provided with four wheels. The four wheels can drive the toolboxes 1061 mounted on the platform cart to move. The base 20 is coupled to two adjacent intermediate members of the toolbox 1061, and then the storage container 10 is coupled to the base 20. Thus, the user can place a variety of tools required for work on a sidewall of the toolbox 1061. That is, the base 20 and the storage container 10 are connected to the sidewall of the toolbox 1061 and a movable function of the platform cart is used so that the platform cart system 108 is turned into a movable platform cart storage rack. Thus, at the workplace, the user can couple tools that may be used in subsequent work to the sidewall of the toolbox 1061 so that it is convenient for the user to directly take the tools when working. In addition, it is also convenient for the user to couple some pole tools (such as a ladder) or large tools (such as a large bucket) to the sidewall, which is convenient for transportation and is also convenient for the user to take the tools when working.

As shown in FIGS. 45 and 46, the base 20 and the storage container 10 in the storage system 100 described in the present application may each mate with the handcart 109. Thus, the item 101 can be coupled to the handcart 109. Similarly, the base 20 and the storage container 10 here may each mate with the handcart 109, which may be understood as follows: the base 20 is detachably mounted on the handcart 109, and the storage container 10 is detachably mounted on the base 20, or which may be understood as follows: the base 20 is formed on the handcart 109, that is, the base 20 and the handcart 109 are integrally formed, and the storage container 10 is detachably mounted on the base 20. The handcart 109 includes a traveling assembly, a first support plate 1081, a second support plate 1082, a handle 1083, and the toolbox 1061. The second support plate 1082 is connected to the first support plate 1081 through the mating of the toolbox 1061 with the handle 1083. The traveling assembly is disposed below the first support plate 1081, and the user supports the first support plate 1081 to move relative to the ground.

The first support plate 1081, the second support plate 1082, and the toolbox 1061 are all connected to or formed with intermediate sections 107. The user connects the base 20 to two adjacent connecting sections and then mounts the storage container 10 on the base 20. Further, the user may couple the item 101 that needs to be used in an actual working condition to the storage container 10. Thus, it is convenient that the user can place more items 101 on the handcart 109 when using the handcart 109. In addition, the user may connect multiple bases 20 to the intermediate section 107, and multiple or several storage containers 10 may be connected to the base 20, that is, the user may couple more items 101 to the storage containers 10. Therefore, when working, the user can directly couple the required tools to the storage containers 10, and it is convenient for the user to take the tools. Moreover, the user does not stay at one work site generally when working and often moves to another workplace. In this case, the user can directly push the handcart 109 to take away the items 101 required for work, which significantly improves the user's work efficiency.

As shown in FIGS. 47 and 48, as another example of a cart, this example is different from the preceding example of the handcart 109 only in that the first support plate 1081 and the second support plate 1082 are connected at intervals through two toolboxes 1061. The user may store a pull rod in the first support plate 1081. In this manner, the system of the handcart 109 may become a structure similar to the double-layer platform cart system 108. Other structures are the same as those in the preceding example. Similarly, the cart system in this example may also be switched to a movable storage rack so that it is convenient for the user to move, store and classify, and take the tools.

Of course, the storage container 10 and the base 20 described in the present application are not limited to being used on the preceding tool systems and may also be used on another tool as long as the tool is formed with two or more wall surfaces 103 that can be connected to the base 20. Alternatively, the base 20 may be formed directly on the tool, and then the storage container 10 is mounted on the base 20.

As shown in FIGS. 49 to 69, as an example of the toolbox system, a toolbox system 80 includes a pull rod device 822, a traveling device 821, a storage device, and a connecting device 83. The storage device is a main storage portion of the toolbox system 80, which may be understood as follows: the toolbox system 80 may include multiple toolboxes, and the toolboxes may be used separately or may be connected and used together. Each of the toolboxes includes sidewalls disposed substantially along the front and rear direction or the left and right direction, that is, a front sidewall 813, a rear sidewall, a left sidewall, a right sidewall, and a bottom wall and a top wall that are connected to the preceding sidewalls. The front sidewall 813, the rear sidewall, the left sidewall, the right sidewall, and the bottom wall form an accommodation space, and the accommodation space is configured to store items. To facilitate description of the technical solution of the present application, the toolboxes are defined here as a first-type toolbox 81 and a second-type toolbox 82. Of course, the toolboxes in the toolbox system 80 are not limited to the preceding two toolboxes, and other toolboxes may also exist in the toolbox system 80. What is described here is a relationship between any two toolboxes. In addition, the first-type toolbox 81 and the second-type toolbox 82 here may be the same type of toolbox or may be different types of toolboxes. That is, it is only defined here that the first-type toolbox 81 and the second-type toolbox 82 are not the same toolbox, and specific structures of the first-type toolbox 81 and the second-type toolbox 82 are not defined. The first-type toolbox 81 and the second-type toolbox 82 may be the same type of toolbox. Of course, the toolbox system 80 may also include a third-type toolbox or even a fourth-type toolbox.

The pull rod device 822 is connected to the second-type toolbox 82 and has a pull rod for the user to grip. A structure of the pull rod device 822 may be a common pull rod structure on the market, which is not be described in detail here. The pull rod is disposed on a rear sidewall of the second-type toolbox 82 to facilitate the user's operation.

The traveling device 821 is connected to the second-type toolbox 82. The traveling device 821 includes one or more wheels. The traveling device 821 enables the second-type toolbox 82 to move relative to the ground. The wheels are generally disposed at positions on a left sidewall of the second-type toolbox 82 and a right sidewall of the second-type toolbox 82, where the positions are close to the rear sidewall.

The connecting device 83 is configured to couple the first-type toolbox 81 and the second-type toolbox 82. That is to say, the user may grip the pull rod to pull or push the wheels to rotate relative to the ground, thereby driving the first-type toolbox 81 and the second-type toolbox 82 to move together. It is to be noted that the second-type toolbox 82 may be provided with the pull rod device 822 and the traveling device 821. In this manner, the first-type toolbox 81 is directly stacked on the second-type toolbox 82.

As shown in FIGS. 50 to 57, the connecting device 83 is configured to couple the first-type toolbox 81 to an upper end of the second-type toolbox 82. The connecting device 83 includes a first connecting member 831, a second connecting member 832, a first adapter 833, a second adapter 834, and an operation member. The first connecting member 831 mates with the first adapter 833, and the second connecting member 832 mates with the second adapter 834. The operation member can be driven by the user to move. During the movement of the operation member, the first connecting member 831 moves accordingly. During the movement of the first connecting member 831, the first connecting member 831 and the first adapter 833 are brought into either a separated state or a contact state. When the first connecting member 831 is separated from the first adapter 833, the first-type toolbox 81 is configured to be removable from the second-type toolbox 82. When the first connecting member 831 contacts the first adapter 833, the first-type toolbox 81 is configured to be coupled to the second-type toolbox 82.

That is, the toolbox system 80 has at least two states, which are defined here as a first state and a second state. When the toolbox system 80 is in the first state, the first-type toolbox 81 is connected to the second-type toolbox 82, and the first-type toolbox 81 is movable together with the second-type toolbox 82. When the toolbox system 80 is in the second state, the first-type toolbox 81 can be separated from the second-type toolbox 82 and be used separately. In this manner, the user can select different states according to actual working conditions, thereby improving convenience of use. As an example, the traveling device 821 and the pull rod device 822 may be mounted to the second-type toolbox 82. In this manner, the user may mount the first-type toolbox 81 on the second-type toolbox 82. Then, the user drives the second-type toolbox 82 so that the first-type toolbox 81 can be driven to move together. The third-type toolbox may also be connected to the first-type toolbox 81 through the connecting device 83. Of course, the traveling device 821 and the pull rod device 822 may not be mounted to the second-type toolbox 82. In this manner, the first-type toolbox 81 is stacked on the second-type toolbox 82. The preceding connecting device 83 connects two toolboxes, that is to say, the same structure may also be disposed on the third-type toolbox. In this manner, the third-type toolbox is connected to the first-type toolbox 81 or directly connected to the second-type toolbox 82 through the connecting device 83 so that the toolboxes are stacked.

A state switchover between the first state and the second state is implemented through the connecting device 83. Along the up and down direction, a height of the connecting device 83 is lower than a height of an upper cover 811 of the first-type toolbox 81. In this manner, when the user connects the two toolboxes, the connecting device 83 is protected against damage caused by a surrounding environment or the user's operation. The operation member in the connecting device 83 is configured to be driven by the user. In a process where the user drives the operation member, the first connecting member 831 can be driven to move together, thereby implementing separation or contact between the first connecting member 831 and the first adapter 833 and further implementing the state switchover of the toolbox system 80. The operation member is disposed on a sidewall of the first-type toolbox 81. Along the up and down direction, a height of the operation member is lower than the height of the upper cover 811 of the first-type toolbox 81. That is to say, a region where the user drives the operation member is located on the sidewall of the first-type toolbox 81. When transporting or storing the toolboxes, the user places multiple columns of toolboxes closely together to save space and store more items, which results in a very limited operation space for every two adjacent columns of toolboxes. The operation member is disposed on the sidewall so that it can be convenient for the user to drive the operation member in a confined space and convenient for the user to switch the states.

The first-type toolbox 81 includes the upper cover 811 and a box body 812. The box body 812 forms an accommodation space for accommodation items, and the upper cover 811 is configured to enclose the storage space. The box body 812 is formed by a front sidewall 813, a rear sidewall, a left sidewall, a right sidewall, and a bottom wall. The upper cover 811 is movable relative to the box body 812. Thus, it is convenient for the user to open the upper cover 811 to place or store items in the accommodation space. The operation member is disposed on the sidewall formed by the box body 812, and the height of the operation member is lower than the height of the upper cover 811. With this configuration, it is convenient for the user to use the operation member and the upper cover 811, and interference between the two is avoided.

In this example, the upper cover 811 is pivotally connected to the box body 812, that is, the upper cover 811 and the box body 812 are connected to each other through a pivot shaft. The pivot shaft is disposed on the rear sidewall of the box body 812 so that the user can rotate the upper cover 811 from the side of the front sidewall 813 to open the accommodation space. The operation member is also disposed on the front sidewall 813. In this manner, if the user wants to open the upper cover 811 to take out or store items, or if the user wants to remove the toolbox from another toolbox, the user can perform these operations without moving the toolbox. It is to be noted that in some other examples, the top cover may be omitted.

The connecting device 83 includes the first connecting member 831, the second connecting member 832, the first adapter 833, the second adapter 834, and the operation member. The operation member is drivable by the user, and the user drives the operation member to control the movement of the first connecting member 831. The first connecting member 831 is connected to the first-type toolbox 81, and the second connecting member 832 is connected to the first-type toolbox 81. The first adapter 833 is connected to or formed on the second-type toolbox 82, and the second adapter 834 is connected to or formed on the second-type toolbox 82. The operation member is disposed on the front sidewall 813 of the first-type toolbox 81. The first connecting member 831 mates with the first adapter 833, and the second connecting member 832 mates with the second adapter 834. The first connecting member 831 is formed with a first connecting portion 3111 that can be coupled to the first adapter 833. The second connecting member 832 is formed with a second connecting portion 8321 that can abut against the second adapter 834 after the first connecting portion 3111 is coupled to the first adapter 833.

According to a feasible operation method, when the user wants to switch the toolbox system 80 from the first state to the second state, the user drives the operation member, the operation member drives the first connecting member 831 to move rearward by a preset distance from an initial position to a preset position so that the first connecting portion 3111 is separated from the first adapter 833, one end of the first-type toolbox 81 is rotated upward to a certain angle, and the first-type toolbox 81 is then removed from the first-type toolbox 81. In this case, the second connecting portion 8321 is separated from the second adapter 834, and at the same time, the toolbox system 80 completes a switchover from the first state to the second state. It is to be noted here that the initial position refers to a position of the first connecting member 831 in the case where the operation member is not affected by an external force. The preset position is not a fixed position. Any position where the first connecting portion 3111 can be separated from the first adapter 833 may be regarded as the preset position. Therefore, the preset distance of movement is not a fixed value and is also determined according to the current user's habits or a maximum distance which the first connecting member 831 can move.

When the user wants to switch the toolbox system 80 from the second state to the first state, the user grips the first-type toolbox 81 at a certain inclination angle, brings the second connecting portion 8321 into contact with the second adapter 834, and then rotates the first-type toolbox 81 downward until the first connecting portion 3111 is coupled to the first adapter 833. In this case, the first-type toolbox 81 is coupled to the second-type toolbox 82, and the toolbox system 80 completes a switchover from the second state to the first state.

As an example, the connecting device 83 also includes an elastic member 837 and a fixing member 838. In this example, the first connecting member 831 and the operation member are formed on one part, which may be understood as follows: the first connecting member 831 is formed with an operation portion 8312 for the user to drive. Several first-type connecting posts 814 are formed on and protrude forward from the front sidewall 813 of the first-type toolbox 81. Several engagement slots 8313 are formed on the first connecting member 831 to mate with the first-type connecting posts 814. Part of the engagement slots 8313 can be sleeved on outer sides of the first-type connecting posts 814. The elastic member 837 is disposed between the first-type toolbox 81 and the first connecting member 831, that is, the elastic member 837 is sleeved on a first-type connecting post 814. One end of the elastic member 837 abuts against the first-type toolbox 81, and the other end of the elastic member 837 abuts against the first connecting member 831. At least one second-type connecting post 815 is also formed on and protrudes forward from the front sidewall 813 of the first-type toolbox 81. A cover plate 836 is formed with at least one through hole corresponding to the second-type connecting post 815. The fixing member 838 extends through the through hole to be connected to the second-type connecting post 815, thereby fixedly connecting the cover plate 836 to the first-type toolbox 81. An opening is formed on the cover plate 836 for the operation portion 8312 on the first connecting member 831 to protrude from. With this configuration, it is convenient for the user to drive the operation portion 8312.

In this example, to ensure stability of the connection between the first-type toolbox 81 and the second-type toolbox 82, several first connecting portions 3111 are provided on the first connecting member 831. Similarly, to adapt to the first connecting portions 3111, several first adapter portions 8331 are provided on the first adapter 833, where the first adapter portions 8331 mate with the first connecting portions 3111. That is, the first connecting portions 3111 can be coupled to the first adapter portions 8331 on the first adapter 833 only after the first-type toolbox 81 rotates by a preset angle. The specific number of the first connecting portions 3111 is two. The two first connecting portions 3111 are provided at two ends of the first connecting member 831, respectively. The number of the first adapter portions 8331 is also two. The two first adapter portions 8331 are provided at two ends of an upper cover 811 of the second-type toolbox 82. The first connecting portions 3111 are specifically hooks, and the first adapter portions are specifically slots. The second connecting member 832 is integrally formed with the first-type toolbox 81. The second connecting member 832 is formed with a second connecting portion 8321 that can abut against the second-type toolbox 82 only after the first connecting portion 3111 is coupled to the first adapter portion 8331. Two second connecting portions 8321 are formed on the second connecting member 832, that is, the two second connecting portions 8321 are formed on the first-type toolbox 81. Two second adapter portions 8341 are formed on the second adapter 834, where the two second adapter portions 8341 mate with the second connecting portions 8321. The second connecting portions 8321 are specifically hooks, and the second adapter portions 8341 are specifically slots.

In addition, three elastic members 837 are provided. With this configuration, the first connecting member 831 can receive an even force when moving rearward, thereby avoiding the case where the first connecting member 831 receives an uneven force during the movement, causing the first connecting member 831 to fail to be separated from the first adapter 833. That is to say, three first-type connecting posts 814 are provided on the first-type toolbox 81. Specifically, one first-type connecting post 814 is provided at a rear end of the operation portion 8312, and the other two first-type connecting posts 814 are provided at rear ends of the first connecting portions 3111.

The user switches the toolbox system 80 from the first state to the second state. The user touches the operation portion 8312 and presses the operation portion 8312 rearward. The first connecting member 831 is forced to move rearward by the preset distance to the preset position. In this case, the elastic members 837 are deformed due to the force, and the first connecting portions 3111 are separated from the first adapter portions 8331. In this case, the second connecting portions 8321 and the second adapter portions 8341 are still in contact. The user then lifts one end of the first-type toolbox 81 upward, that is, the end of the front sidewall 813 of the first-type toolbox 81 is rotated upward. Since the second connecting portions 8321 and the second adapter portions 8341 are still in contact, the first-type toolbox 81 is inclined relative to the second-type toolbox 82 in this case. Then, the first-type toolbox 81 is removed from the second-type toolbox 82, that is, the second connecting portions 8321 are separated from the second adapter portions 8341. Thus, the toolbox system 80 is switched from the first state to the second state.

The user switches the toolbox system 80 from the second state to the first state. The user grips the first-type toolbox 81 and brings the second connecting portions 8321 of the first-type toolbox 81 into contact with the second adapter portions 8341. Then, the first-type toolbox 81 may be rotated downward so that the first connecting portions 3111 are brought into contact with the first adapter portions 8331. The user continues applying a force so that the first connecting portions 3111 are forced to move rearward and compress the elastic members 837. When snaps are engaged into the slots, the elastic members 837 recover from deformation, coupling the first connecting portions 3111 to the first adapter portions 8331.

Of course, after the second connecting portions 8321 properly abut against the second adapter portions 8341, the first-type toolbox 81 is directly released. In this manner, the first connecting portions 3111 are directly engaged with the first adapter portions 8331 under action of gravity of the first-type toolbox 81. Thus, the first-type toolbox 81 is coupled to the second-type toolbox 82.

As shown in FIGS. 10 and 11, the connecting device 83 further includes a retaining assembly 84. The retaining assembly 84 is configured to retain the first connecting member 831 in a state of being separated from the first adapter 833. The retaining assembly 84 includes a stop member 841. The stop member 841 is connected to or formed on the second-type toolbox 82. The stop member 841 can mate with the first connecting member 831 so that in a process where the first connecting portions 3111 are separated from the first adapter portions 8331, the first connecting portions 3111 are always retained at the preset position. In this manner, the user does not need to keep pressing the operation portion 8312, and the first connecting member 831 is retained at the preset position, thereby improving the convenience of use.

The retaining assembly 84 is disposed at a lower end of the first connecting member 831. The retaining assembly 84 includes the stop member 841, a biasing member 844, a movable member 842, and a sleeve 843. The stop member 841 is connected to or integrally formed with the second-type toolbox 82. The biasing member 844 and the movable member 842 are connected to the first connecting member 831 through the sleeve 843. One end of the biasing member 844 abuts against the movable member 842, and the other end of the biasing member 844 abuts against the first connecting member 831. The sleeve 843 is provided with a through hole for at least part of the movable member 842 to pass through. The part of the movable member 842 passing through the through hole can mate with the stop member 841 during the state switchover of the toolbox system 80, thereby retaining the first connecting member 831 at the preset position. The cover plate 836 is formed with a through hole for a driving member to at least partially pass through. That is, when the toolbox system 80 is in the first state, the stop member 841 partially passes through the cover plate 836. When the toolbox system 80 is in the second state, the stop member 841 is separated from the movable member 842. The movable member 842, the biasing member 844, and the sleeve 843 are connected to the first connecting member 831 and move together with the first connecting member 831.

Specifically, when the toolbox system 80 is in the first state, the first connecting member 831 is at the preset position, and the stop member 841 passes through the through hole on the cover plate 836. When the toolbox system 80 is switched from the first state to the second state, the user drives the operation portion 8312 to move rearward, that is, the first connecting member 831 moves rearward. In a process where the first connecting member 831 moves rearward, the first connecting member 831 drives the movable member 842 to move the preset distance to the preset position. During the movement of the first connecting member 831, the movable member 842 approaches the stop member 841 until the movable member 842 contacts the stop member 841. Because the first connecting member 831 continues moving rearward, the movable member 842 is forced to compress the biasing member 844 until the movable member 842 crosses the stop member 841. The first connecting member 831 stops moving after reaching the preset position. In this case, the user removes the force applied to the first connecting member 831. In this case, the first connecting member 831 moves forward under action of the elastic members 837. Until the movable member 842 abuts against the stop member 841, the first connecting member 831 stops moving and is retained at a current position. In this case, the first connecting portions 3111 are separated from the first adapter portions 8331, and the second connecting portions 8321 are connected to the second adapter portions 8341. Then, the user grips the first-type toolbox 81 and rotates one end of the first-type toolbox 81 upward. During the rotation of the first-type toolbox 81, the stop member 841 is separated from the movable member 842. In this case, the first connecting member 831 loses an abutting force and continues moving forward to the initial position. As an angle of rotation of the first-type toolbox 81 increases, the stop member 841 is gradually separated from the cover plate 836 until the stop member 841 is completely separated.

The biasing member 844 is specifically a spring.

As another possible implementation manner, the stop member may be connected to the first-type toolbox, and the movable member may be connected to the second-type toolbox.

As shown in FIGS. 60 to 69, as another example, the connecting device 85 further includes a cover plate 856, an elastic member 857, a reset member 859, and a fixing member 858. In this example, an operation member 855 and a first connecting member 851 are two separate components. The operation member 855 can be driven by the user to move upward. In a process where the operation member 855 moves upward, the first connecting member 851 is forced to move rearward by a preset distance to a preset position, and a first connecting portion 8511 is separated from a first adapter 853. Then, after one end of the first-type toolbox 81 is rotated upward to a certain angle, the first-type toolbox 81 is removed from the first-type toolbox 81. In this case, a second connecting portion 8521 is separated from a second adapter 854, and at the same time, the toolbox system 80 completes the switchover from the first state to the second state. When the user wants to switch the toolbox system 80 from the second state to the first state, the user grips the first-type toolbox 81 at a certain inclination angle, brings the second connecting portion 8521 into contact with the second adapter 854, and then rotates the first-type toolbox 81 downward until the first connecting portion 8511 is coupled to the first adapter 853. In this case, the first-type toolbox 81 is coupled to the second-type toolbox 82, and the toolbox system 80 completes the switchover from the second state to the first state.

Several first-type connecting posts 871 are formed on and protrude forward from the front sidewall 813 of the first-type toolbox 81. Several engagement slots are formed on the first connecting member 851 to mate with the first-type connecting posts 871. Part of the engagement slots can be sleeved on outer sides of the first-type connecting posts 871. The elastic member 857 is disposed between the first-type toolbox 81 and the first connecting member 851, that is, the elastic member 857 is sleeved on a first connecting post. One end of the elastic member 857 abuts against the first-type toolbox 81, and the other end of the elastic member 857 abuts against the first connecting member 851.

At least one second-type connecting post 872 is also formed on and protrudes forward from the front sidewall 813 of the first-type toolbox 81. A cover plate 856 is formed with at least one through hole corresponding to the second-type connecting post 872. The fixing member 858 extends through the through hole to be connected to the second-type connecting post 872, thereby fixedly connecting the cover plate 856 to the first-type toolbox 81. A third-type connecting post 873 is also formed on the first-type toolbox 81. The third connecting post extends substantially along the up and down direction. The reset member 859 is sleeved on the third-type connecting post 873. One end of the reset member 859 abuts against the first-type toolbox 81, and the other end of the reset member 859 abuts against the operation member 855. A driving portion 8551 is formed on the operation member 855. The driving portion 8551 is configured to drive the first connecting member 851 to move rearward in a process where the operation member 855 is forced to move upward. An opening is formed on the cover plate 856 for an operation portion 8552 on the operation member 855 to protrude from. Moreover, the operation portion 8552 can be operated by the user to slide up and down within the opening. With this configuration, it is convenient for the user to drive the operation portion 8552.

In this example, to ensure the stability of the connection between the first-type toolbox 81 and the second-type toolbox 82, several first connecting portions 8511 are provided on the first connecting member 851. Similarly, to adapt to the first connecting portions 8511, several first adapter portions 8531 are provided on the first adapter 853, where the first adapter portions 8531 mate with the first connecting portions 8511. The specific number of the first connecting portions 8511 is two. The two first connecting portions 8511 are provided at two ends of the first connecting member 851, respectively. The number of the first adapter portions 8531 is also two. The two first adapter portions 8531 are provided at the two ends of the upper cover 811 of the second-type toolbox 82. The first connecting portions 8511 are specifically hooks, and the first adapter portions 8531 are specifically slots. Similarly, two second connecting portions 8521 are formed on a second connecting member 852. The second connecting member 852 is integrally formed with the first-type toolbox 81, that is, the two second connecting portions 8521 are formed on the first-type toolbox 81. Two second adapter portions 8541 are formed on the second adapter 854, where the two second adapter portions 8541 mate with the second connecting portions 8521. The second connecting portions 8521 are specifically hooks, and the second adapter portions 8541 are specifically slots.

In addition, two elastic members 857 are provided. With this configuration, the first connecting member 851 can receive an even force when moving rearward, thereby avoiding the case where the first connecting member 851 receives an uneven force during the movement, causing the first connecting member 851 to fail to be separated from the first adapter 853. That is to say, two first-type connecting posts 871 are provided on the first-type toolbox 81. Specifically, the two first-type connecting posts 871 are provided at rear ends of the first connecting portions 8511. Similarly, to ensure that the operation member 855 slides smoothly during upward and downward movements, two reset members 859 are also provided.

A movement direction of a contact portion 8512 forms an included angle with a movement direction of the driving portion 8551. Specifically, the driving portion 8551 is a bevel formed on the operation member 855. The first connecting member 851 is formed with the contact portion 8512 that mates with the driving portion 8551. The contact portion 8512 is a bevel. The driving portion 8551 and the contact portion 8512 are always in contact. An inclination angle of the bevel of the contact portion 8512 is substantially the same as an inclination angle of the bevel of the driving portion 8551, but inclination directions of the two are opposite. In this manner, the driving portion 8551 moves upward, and the contact portion 8512 is forced to move rearward.

The user switches the toolbox system 80 from the first state to the second state. The user touches the operation portion 8552 and presses the operation portion 8552 upward. The reset member 859 is forced to deform. The contact portion 8512 on the first connecting member 851 is forced to move rearward by the preset distance to the preset position. The elastic members 857 are deformed due to the force, and the first connecting portions 8511 are separated from the first adapter portions 8531. In this case, the second connecting portions 8521 and the second adapter portions 8541 are still in contact. The user then lifts one end of the first-type toolbox 81 upward, that is, the end of the front sidewall 813 of the first-type toolbox 81 is rotated upward. Since the second connecting portions 8521 and the second adapter portions 8541 are still in contact, the first-type toolbox 81 is inclined relative to the second-type toolbox 82 in this case. Then, the first-type toolbox 81 is removed from the second-type toolbox 82, that is, the second connecting portions 8521 are separated from the second adapter portions 8541. Thus, the toolbox system 80 is switched from the first state to the second state.

The user switches the toolbox system 80 from the second state to the first state. The user grips the first-type toolbox 81 and brings the second connecting portions 8521 of the first-type toolbox 81 into contact with the second adapter portions 8541. Then, the first-type toolbox 81 may be rotated downward so that the first connecting portions 8511 are brought into contact with the first adapter portions 8531. The user continues applying a force so that the first connecting portions 8511 are forced to move rearward and compress the elastic members 857. When snaps are engaged into the slots, the elastic members 857 recover from deformation, coupling the first connecting portions 8511 to the first adapter portions 8531.

Of course, after the second connecting portions 8521 properly abut against the second adapter portions 8541, the first-type toolbox 81 is directly released. In this manner, the first connecting portions 8511 are directly engaged with the first adapter portions 8531 under the action of the gravity of the first-type toolbox 81. Thus, the first-type toolbox 81 is coupled to the second-type toolbox 82.

Similarly, as shown in FIG. 69, in this example, the connecting device 85 also has a retaining assembly 860. A structure and principle of the retaining assembly 860 in this example are substantially the same as those of the retaining assembly 860 in the preceding example. The details are not repeated here. A difference is that a sleeve 861 is specifically mounted at a lower end of the driving portion 8551.

A storage container 90 is a fourteenth feasible implementation structure, and a base 91 is a tenth feasible implementation structure. As shown in FIGS. 71 and 72, several guide portions 92 are connected to or formed on the base 91. The storage container 90 is connected to or formed with a coupling portion 93 that can mate with the preceding guide portion 92. The coupling portion 93 is configured to be connectable to any guide portion 92 on the base 91.

The storage system further includes a mounting assembly 94. The mounting assembly includes a locking member 95 provided with a locking portion 951. The locking member 95 is connected to or formed on the storage container 90. The locking member 95 is used for abutting against the abutting portion 96 formed on the base 91 after the coupling portion 93 is mounted on the guide portion 92. When the locking member 95 abuts against the abutting portion 96, the storage container 90 is fixedly connected to the base 91 in the absence of an external force.

The abutting portion 96 is connected to or formed on the guide portion 92, and the locking portion 951 protrudes rearward. In this manner, when the storage container 90 is mounted on the base 91, the abutting portion 96 abuts against the locking portion 951.

The guide portion 92 is a T-shaped insertion block, and the coupling portion 93 is a mounting groove. The locking member 95 may be made of an elastic material. The locking member 95 may be an elastic tab. The elastic tab is disposed in the middle of the mounting groove. The abutting portion 96 is a slot formed on the insertion block.

In a mounting manner, when the user wants to mount the storage container 90 on the base 91, the user grips a body portion 901 of the container 90, substantially aligns the mounting groove with the insertion block, and then sleeves the mounting groove on the insertion block. Then, the mounting groove is guided by the insertion block to slide downward to a bottom. Since the locking portion 951 protrudes rearward, after the mounting groove slides to the bottom, the locking portion 951 is just engaged in the slot so that the storage container 90 is fixedly mounted on the base 91. Similarly, when the user wants to separate the storage container 90 from the base 91, the user needs to pull the elastic tab outward to separate the locking portion 951 from the slot. The user then drives the body portion upward so that the mounting groove is guided by the insertion block to slide upward until the mounting groove is separated from the insertion block. In this case, the storage container 90 is separated from the base 91.

In addition, the storage container 90 in the storage system may be mounted on a toolbox 97. That is, the toolbox 97 is connected to or formed with a guide portion 92 whose structure is substantially consistent with a structure of the guide portion 92 on the base 91. The storage container 90 mounted on the base 91 can be detached and then mounted on the guide portion 92 of the toolbox 97.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A wall-mountable storage system, comprising:
a base detachably connected to a wall surface; and
a storage container configured to be coupled to an item;
wherein the storage container is configured to be detachably connected to the base; and
wherein the storage system comprises an adjustment portion, the storage container is detachably and fixedly connected to a first position on the base and a second position on the base, the storage container moves between the first position and the second position through the adjustment portion, and the storage container is connected on the base in a process where the storage container moves from the first position to the second position.

2. The storage system according to claim 1, wherein the base has a length direction, and in the length direction of the base, when the storage container is mounted to the first position, a distance which the storage container is guided by the adjustment portion to move is greater than 0 mm and less than a length of the base along the length direction.

3. The storage system according to claim 1, wherein the distance which the storage container is guided by the adjustment portion to move is less than a distance of the storage container along the length direction of the base.

4. The storage system according to claim 1, wherein the storage container is mounted to the first position on the base, and the storage container is guided by the adjustment portion to slide from the first position to any position on the base.

5. The storage system according to claim 1, wherein the storage system has a first-type storage container and a second-type storage container, the first-type storage container is mounted at the first position on the base, the second-type storage container is mounted at the second position on the base, and the first-type storage container is configured to be removed from the first position.

6. The storage system according to claim 1, wherein the adjustment portion is disposed on the base.

7. The storage system according to claim 1, further comprising a mounting assembly, wherein the mounting assembly comprises a locking portion, the locking portion has at least a locking state and a release state relative to the base, when the locking portion is in the locking state, the storage container is configured to be fixedly connected to the base, and when the locking portion is in the release state, the storage container is configured to be movable relative to the base and removable from the base.

8. The storage system according to claim 7, wherein the storage container further comprises a coupling portion, the coupling portion is mounted to the adjustment portion, and the coupling portion is guided by the adjustment portion to move on the base.

9. The storage system according to claim 7, wherein the base is provided with an abutting portion that mates with the locking portion, when the locking portion contacts the abutting portion, the storage container and the base remain relatively fixed, and when the locking portion is separated from the abutting portion, the storage container is separated from the base and moves.

10. The storage system according to claim 7, wherein the base is provided with an abutting portion that mates with the locking portion, and on a plane formed along an up and down direction of the base and a front and rear direction of the base, a projection of the adjustment portion is arc-shaped, and a projection of the abutting portion is arc-shaped.

11. The storage system according to claim 7, wherein the storage container comprises an operation portion, a body portion, an engagement portion, and the locking portion, the engagement portion is configured to be coupled to the item, the body portion is connected to the base, and the locking portion is configured to move together with the operation portion.

12. The storage system according to claim 11, wherein the operation portion is located at an upper end of the body portion.

13. The storage system according to claim 11, wherein the operation portion is located at a lower end of the body portion.

14. The storage system according to claim 11, wherein when the storage container is mounted on the base, the operation portion is pressed so that the locking portion is separated from the base, and after the storage container is guided by the adjustment portion to move to the second position, the operation portion is released so that the locking portion abuts against the base.

15. The storage system according to claim 11, further comprising an elastic member, wherein one end of the elastic member abuts against an operation member, and the other end of the elastic member abuts against the body portion, when the operation member is driven to move, the elastic member is deformed under force, and the locking portion moves away from the elastic member in this case, and when an external force on the operation portion is removed, the elastic member recovers from the deformation, and the locking portion moves toward the elastic member in this case.

16. The storage system according to claim 11, wherein the operation portion and the locking portion are integrally formed.

17. The storage system according to claim 11, wherein the engagement portion is configured to have a folded state and a use state relative to the body portion, when the engagement portion is in the folded state, the engagement portion is folded upward, and when the engagement portion is in the use state, the engagement portion is configured to be capable of being coupled to the item.

18. The storage system according to claim 1, further comprising a mounting assembly, wherein the adjustment portion is an elongated slotted hole provided on a body portion, and the mounting assembly extends through the slotted hole and is connected to the base.

19. The storage system according to claim 1, further comprising a mounting assembly, wherein the adjustment portion is an elongated through hole provided on the base, and the mounting assembly extends through the storage container and is connected to the through hole of the base.

20. The storage system according to claim 1, further comprising a mounting assembly, wherein the mounting assembly and the base are capable of adopting one or a combination of a clamp, a screw, a snap, an insert pin, and a mortise and tenon.

21. The storage system according to claim 1, wherein the storage container further comprises a coupling portion, a body portion, and a mounting assembly, the mounting assembly comprises a locking portion that are capable of mating with an abutting portion on the base, and when the storage container is connected to the base, the locking portion is configured to be capable of being driven to rotate away from the body portion until the locking portion is separated from the abutting portion, and the storage container is allowed to be removed in this case.

22. The storage system according to claim 21, wherein the mounting assembly comprises a locking member connected to the locking portion, and the locking member is made of an elastic material.

23. The storage system according to claim 21, wherein the locking member is an elastic tab connected to the body portion.

24. The storage system according to claim 21, wherein the mounting assembly further comprises a reset member, one end of the reset member abuts against a locking member, and the other end of the reset member abuts against the body portion, after the coupling portion is engaged with the adjustment portion, the locking member is driven to cause the locking portion to rotate away from the body portion, and until the locking portion is lower than the abutting portion, a force applied to the locking member is removed to cause the locking portion to rotate toward the body portion under action of the reset member until the locking portion contacts the abutting portion.

25. The storage system according to claim 1, wherein the storage container further comprises a coupling portion and a locking portion that mate with the base, a body portion connected to the coupling portion, and at least one stop portion, and the at least one stop portion is configured to mate with a limiting portion formed on the body portion to cause the locking portion to move within a preset range.

26. A movement method of a wall-mountable storage system, wherein the wall-mountable storage system comprises:
a base having a rail extending along a direction; and
a storage container configured to be coupled to an item;
wherein the storage container comprises:
an engagement portion configured to be coupled to the item;
a body portion configured to be connected to the base;
a coupling portion connected to the body portion;
a locking portion mating with the base; and
an operation portion driving the locking portion to be separated from or connected to the base; and
wherein the movement method comprises the following steps:
driving the operation portion to move to cause the locking portion to be separated from the base;
wherein the movement method comprises the following steps:
driving the operation portion to move to cause the locking portion to be separated from the base;
moving the storage container to a preset position along the rail of the base; and
releasing an operation member to cause the locking portion to be connected to the base.

27. A mounting method of a wall-mountable storage system, wherein the wall-mountable storage system comprises:
a base having a rail extending along a direction; and
a storage container configured to be coupled to an item;
wherein the storage container comprises:
an engagement portion configured to be coupled to the item;
a body portion configured to be connected to the base;
a coupling portion connected to the body portion;
a locking portion mating with the base; and
an operation portion driving the locking portion to be separated from or connected to the base; and
wherein the mounting method comprises the following steps:
driving the storage container to insert the coupling portion into the rail;
driving the operation portion to move and rotating the body portion simultaneously until the locking portion rotates to a lower end of the base; and
releasing the operation portion to cause the locking portion to be connected to the base.

28. A wall-mountable storage system, comprising:
a base detachably connected to a wall surface; and
a storage container configured to be coupled to an item;
wherein the storage container is configured to move relative to the base, and in a process where the storage container moves relative to the base, the storage container is connected to the base; and
the storage container comprises a first-type storage container and a second-type storage container, the first-type storage container is mounted at a first position on the base, the second-type storage container is mounted at a second position on the base, and the first-type storage container is configured to be removed from the first position.

29. A handcart comprising the storage system according to any one of claims 1 to 25 and claim 28.

30. A toolbox system comprising the storage system according to any one of claims 1 to 25 and claim 28.
